# EUROPEAN PATENT APPLICATION

(11) **EP 3 840 379 A1**
(43) Date of publication of application: **23.06.2021**
(21) Application number: 21156504.9
(22) Date of filing: 24.11.2016
(51) Int. Cl.: H04N 19/129, H04N 19/176, H04N 19/70, H04N 19/174

(54) **VIDEO DECODING METHOD AND DEVICE, AND ENCODING METHOD THEREFOR**

(30) Priority: 24.11.2015 US 201562259159 P
(62) Divisional of application: 16868919.8
(71) Applicant: Samsung Electronics Co., Ltd., Suwon-si 16677 (KR)
(72) Inventor: LEE, Jin-young, 16582 Gyeonggi-do (KR); CHOI, Ki-ho, 04586 Seoul (KR); KIM, Chan-yul, 13479 Gyeonggi-do (KR); WON, Kwang-hyun, 14626 Gyeonggi-do (KR); PIAO, Yin-ji, 16956 Gyeonggi-do (KR); LEE, Sun-il, 06751 Seoul (KR)
(74) Representative: Appleyard Lees IP LLP

(57) **Abstract**

Video coding techniques are provided, including: determining a shape of one or more scanning units comprised in a current picture, the one or more scanning units consisting of a predetermined number of adjacent largest coding units from among a plurality of largest coding units split from the current picture; generating shape information indicating a number of largest coding units in a single row in the scanning unit and a number of largest coding units in a single column in the scanning unit, wherein a scanning unit consists of NxM largest coding units, wherein at least one of N and M is larger than 1, N indicates the number of largest coding units in a single row in the scanning unit, and M indicate the number of largest coding units in a single column in the scanning unit; determining a processing order of one or more scanning units of the current picture, as an order of performing processing from the lower scanning unit to the upper scanning unit; determining coding units by splitting at least one of a height and a width of the largest coding unit among largest coding units comprised in the one or more scanning units; and determining, as a processing order of the coding units in the largest coding unit, a first order of performing processing in a rightward direction or a second order of performing processing in a leftward direction.

## Description

### TECHNICAL FIELD

The present disclosure relates a video decoding method and apparatus, and a video encoding method and apparatus, and more particularly, to a method of encoding/decoding a video according to an adaptive scan order by using a scanning unit consisting of largest coding units.

### BACKGROUND ART

With the development and supply of hardware capable of reproducing and storing high-resolution or high-definition image content, the necessity for a codec that effectively encodes or decodes high-resolution or high-definition image content is increasing. According to an existing video codec, a coding order of largest coding units follows a raster scan order, and a coding order of coding units that are hierarchically split in a quad-tree structure from the largest coding units follows a z-scan order. That is, an existing coding order is fixedly determined from an upper-left direction toward a lower-right direction, such that locations of reference samples to be used in intra prediction, and a list of adjacent blocks to be used to derive motion information in inter prediction are also fixed. However, a different coding order may be more efficient depending on conditions such as a correlation between a current block and an adjacent block.

### DESCRIPTION OF EMBODIMENTS

### TECHNICAL PROBLEM

Provided are video decoding/encoding methods and apparatuses for improving coding efficiency by performing video decoding/encoding according to an adaptive scan order by using a scanning unit consisting of largest coding units.

### SOLUTION TO PROBLEM

In accordance with an aspect of the disclosure, a video decoding method includes receiving a bitstream of an encoded video; obtaining, from the bitstream, shape information of one or more scanning units each consisting of a predetermined number of adjacent largest coding units from among a plurality of largest coding units split from a picture; determining a shape of the one or more scanning units, based on the obtained shape information; obtaining, from the bitstream, processing order information of the one or more scanning units of a current picture, and processing order information of largest coding units included in the one or more scanning units; determining a processing order of the one or more scanning units included in the current picture, based on the processing order information of the one or more scanning units; determining a processing order of largest coding units included in each of the one or more scanning units, based on the processing order information of largest coding units included in the one or more scanning units; and decoding a plurality of largest coding units included in the current picture according to the determined processing order of the one or more scanning units and the determined processing order of largest coding units included in each of the one or more scanning units.

In accordance with another aspect of the disclosure, a video encoding method includes determining a shape of one or more scanning units each consisting of a predetermined number of adjacent largest coding units from among a plurality of largest coding units split from a picture; generating information indicating the shape of the one or more scanning units; determining a processing order of the one or more scanning units included in a current picture, and a processing order of largest coding units included in each of the one or more scanning units; encoding the plurality of largest coding units included in the current picture according to the determined processing order of the one or more scanning units and the determined processing order of the largest coding units included in each of the one or more scanning units; generating information indicating the processing order of the one or more scanning units, and information indicating the processing order of the largest coding units included in each of the one or more scanning units; and outputting a bitstream of an encoded video, the bitstream including the generated information.

In accordance with another aspect of the disclosure, a video decoding apparatus includes a bitstream receiver configured to receive a bitstream of an encoded video; an information obtainer configured to obtain, from the bitstream, shape information of one or more scanning units each consisting of a predetermined number of adjacent largest coding units from among a plurality of largest coding units split from a picture, processing order information of the one or more scanning units of a current picture, and processing order information of largest coding units included in the one or more scanning units; and a decoder configured to determine a shape of the one or more scanning units, based on the obtained shape information, to determine a processing order of the one or more scanning units included in the current picture, based on the processing order information of the one or more scanning units, to determine a processing order of largest coding units included in each of the one or more scanning units, based on the processing order information of largest coding units included in the one or more scanning units, and to decode the plurality of largest coding units included in the current picture according to the determined processing order of the one or more scanning units and the determined processing order of the largest coding units included in each of the one or more scanning units.

In accordance with another aspect of the disclosure, a video encoding apparatus includes an encoder configured to determine a shape of one or more scanning units each consisting of a predetermined number of adjacent largest coding units from among a plurality of largest coding units split from a picture, to determine a processing order of the one or more scanning units included in a current picture, and a processing order of largest coding units included in each of the one or more scanning units, and to encode the plurality of largest coding units included in the current picture according to the determined processing order of the one or more scanning units and the determined processing order of the largest coding units included in each of the one or more scanning units; an information generator configured to generate information indicating the shape of the one or more scanning units, information indicating the processing order of the one or more scanning units, and information indicating the processing order of the largest coding units included in each of the one or more scanning units; and a bitstream output unit configured to output a bitstream of an encoded video which includes the generated information.

### ADVANTAGEOUS EFFECTS OF DISCLOSURE

According to an embodiment, coding efficiency may be improved by performing video decoding/encoding according to an adaptive scan order by using a scanning unit consisting of largest coding units.

### BRIEF DESCRIPTION OF DRAWINGS

FIG. 1A illustrates a block diagram of a video decoding apparatus, according to an embodiment.
FIG. 1B illustrates a block diagram of a video encoding apparatus, according to an embodiment.
FIGS. 2A to 2D are reference diagrams illustrating shapes of a scanning unit, according to an embodiment.
FIGS. 3A to 3C illustrate a processing order of scanning units according to shapes of the scanning units, according to an embodiment.
FIGS. 4A to 4C illustrate a processing order of largest coding units included in a scanning unit, according to an embodiment.
FIG. 5A is a reference diagram for describing a process of determining a processing order of a plurality of scanning units included in a current picture, according to an embodiment.
FIG. 5B illustrates intra prediction modes, according to an embodiment.
FIG. 5C illustrates a reference sample used when a current block is intra predicted, according to an embodiment.
FIGS. 6A and 6B are reference diagrams for describing a process of determining a processing order of a plurality of largest coding units included in a current scanning unit, according to an embodiment.
FIG. 7 illustrates a process of mirroring sample values of a scanning unit, without changing a scan order, according to an embodiment.
FIG. 8 illustrates a flowchart of a video decoding method, according to an embodiment.
FIG. 9 illustrates a flowchart of a video encoding method, according to an embodiment.
FIG. 10 illustrates a process of determining at least one coding unit when a current coding unit is split, according to an embodiment.
FIG. 11 illustrates a process of determining at least one coding unit when a coding unit having a non-square shape is split, according to an embodiment.
FIG. 12 illustrates a process of splitting a coding unit, based on at least one of block shape information and split shape information, according to an embodiment.
FIG. 13 illustrates a method of determining a predetermined coding unit from among an odd number of coding units, according to an embodiment.
FIG. 14 illustrates an order of processing a plurality of coding units when the plurality of coding units are determined when a current coding unit is split, according to an embodiment.
FIG. 15 illustrates a process of determining that a current coding unit is split into an odd number of coding units when coding units are unable to be processed in a predetermined order, according to an embodiment.
FIG. 16 illustrates a process of determining at least one coding unit when a first coding unit is split, according to an embodiment.
FIG. 17 illustrates that a shape of a second coding unit that is splittable is limited when the second coding unit having a non-square shape, which is determined when a first coding unit is split, satisfies a predetermined condition, according to an embodiment.
FIG. 18 illustrates a process of splitting a coding unit having a square shape when split shape information does not indicate splitting of the coding unit into four coding units having square shapes, according to an embodiment.
FIG. 19 illustrates that a processing order between a plurality of coding units may be changed according to a split process of a coding unit, according to an embodiment.
FIG. 20 illustrates a process of determining a depth of a coding unit when a shape and size of the coding unit change, when a plurality of coding units are determined when the coding unit is recursively split, according to an embodiment.
FIG. 21 illustrates a depth determinable according to shapes and sizes of coding units, and a part index (PID) for distinguishing between the coding units, according to an embodiment.
FIG. 22 illustrates that a plurality of coding units are determined according to a plurality of predetermined data units included in a picture, according to an embodiment.
FIG. 23 illustrates a processing block that is a criterion in determining a determining order of a reference coding unit included in a picture, according to an embodiment.

### BEST MODE

In accordance with an aspect of the disclosure, a video decoding method includes receiving a bitstream of an encoded video; obtaining, from the bitstream, shape information of one or more scanning units each consisting of a predetermined number of adjacent largest coding units from among a plurality of largest coding units split from a picture; determining a shape of the one or more scanning units, based on the obtained shape information; obtaining, from the bitstream, processing order information of the one or more scanning units of a current picture, and processing order information of largest coding units included in the one or more scanning units; determining a processing order of the one or more scanning units included in the current picture, based on the processing order information of the one or more scanning units; determining a processing order of largest coding units included in each of the one or more scanning units, based on the processing order information of largest coding units included in the one or more scanning units; and decoding a plurality of largest coding units included in the current picture according to the determined processing order of the one or more scanning units and the determined processing order of largest coding units included in each of the one or more scanning units.

Each of the largest coding units may be hierarchically split into one or more coding units having a depth, a coding unit of a current depth may be split into coding units having a lower depth, independently from neighboring coding units, and coding units of the current depth in each of the largest coding units may be decoded according to a processing order of the coding units determined with respect to each of the largest coding units.

The determining of the shape of the one or more scanning units may include determining a whole of the picture as one scanning unit.

The determining of the shape of the one or more scanning units may include determining, as one scanning unit, each row of the plurality of largest coding units in the picture.

The determining of the processing order of the one or more scanning units included in the current picture may include determining, as the processing order of the one or more scanning units, one of an order of performing processing in a downward direction from an uppermost scanning unit and an order of performing processing in an upward direction from a lowermost scanning unit, and the determining of the processing order of the largest coding units included in each of the one or more scanning units may include determining, as the processing order of the largest coding units included in each of the one or more scanning units, one of an order of performing processing in a rightward direction from a leftmost largest coding unit in a row of largest coding units and an order of performing processing in a leftward direction from a rightmost largest coding unit in a row of largest coding units.

The determining of the shape of the one or more scanning units may include determining NxM largest coding units as one scanning unit.

The determining of the processing order of the one or more scanning units included in the current picture may include determining, as the processing order of the one or more scanning units, one of a raster scan order, an inverse order of the raster scan order, a processing order that is equal to the raster scan order in a horizontal direction and is opposite to the raster scan order in a vertical direction, and a processing order that is equal to the raster scan order in the vertical direction and is opposite to the raster scan order in the horizontal direction, and the determining of the processing order of the largest coding units included in each of the one or more scanning units may include determining, as the processing order of the largest coding units included in each of the one or more scanning units, one of the raster scan order, the inverse order of the raster scan order, the processing order that is equal to the raster scan order in the horizontal direction and is opposite to the raster scan order in the vertical direction, and the processing order that is equal to the raster scan order in the vertical direction and is opposite to the raster scan order in the horizontal direction.

The determining of the processing order of the one or more scanning units included in the current picture may include extracting edge information included in a previous picture from sample values of the previous picture; determining a representative value of edge information directions, based on a direction of the extracted edge information; and determining, as the processing order of the one or more scanning units, a processing order that corresponds to the determined representative value and is from among candidate processing orders usable in the current picture.

The determining of the processing order of the one or more scanning units included in the current picture may include generating a statistical value of intra prediction modes used in decoding a previous picture; determining a representative value of the intra prediction modes of the previous picture, based on the statistical value; and determining, as the processing order of the one or more scanning units, a processing order that corresponds to the determined representative value and is from among candidate processing orders usable in the current picture.

The determining of the processing order of the one or more scanning units included in the current picture may include generating a statistical value of a plurality of processing orders of the coding units with respect to all largest coding units included in a previous picture; determining a representative value of the processing orders of the coding units of the previous picture, based on the statistical value; and determining, as the processing order of the one or more scanning units, a processing order that corresponds to the determined representative value and is from among candidate processing orders usable in the current picture.

The determining of the processing order of the largest coding units included in each of the one or more scanning units may include extracting edge information from sample values of a scanning unit co-located in a previous picture or sample values of an adjacent scanning unit adjacent to a current scanning unit in the current picture; determining a representative value of edge information directions, based on a direction of the extracted edge information; and determining, as a processing order of largest coding units included in the current scanning unit, a processing order that corresponds to the determined representative value and is from among candidate processing orders usable in the current scanning unit.

The determining of the processing order of the largest coding units included in each of the one or more scanning units may include generating a statistical value of intra prediction modes used in decoding a scanning unit co-located in a previous picture or an adjacent scanning unit adjacent to a current scanning unit in the current picture; determining a representative value of the intra prediction modes, based on the statistical value; and determining, as a processing order of largest coding units included in the current scanning unit, a processing order that corresponds to the determined representative value and is from among candidate processing orders usable in the current scanning unit.

The determining of the processing order of the largest coding units included in each of the one or more scanning units may include generating a statistical value of a plurality of processing orders of the coding units with respect to all largest coding units included in a scanning unit co-located in a previous picture or an adjacent scanning unit adjacent to a current scanning unit in the current picture; determining a representative value of the processing orders of the coding units, based on the statistical value; and determining, as a processing order of the largest coding units included in the current scanning unit, a processing order that corresponds to the determined representative value and is from among candidate processing orders usable in the current scanning unit.

In accordance with another aspect of the disclosure, a video decoding apparatus includes a bitstream receiver configured to receive a bitstream of an encoded video; an information obtainer configured to obtain, from the bitstream, shape information of one or more scanning units each consisting of a predetermined number of adjacent largest coding units from among a plurality of largest coding units split from a picture, processing order information of the one or more scanning units of a current picture, and processing order information of largest coding units included in the one or more scanning units; and a decoder configured to determine a shape of the one or more scanning units, based on the obtained shape information, to determine a processing order of the one or more scanning units included in the current picture, based on the processing order information of the one or more scanning units, to determine a processing order of largest coding units included in each of the one or more scanning units, based on the processing order information of largest coding units included in the one or more scanning units, and to decode the plurality of largest coding units included in the current picture according to the determined processing order of the one or more scanning units and the determined processing order of the largest coding units included in each of the one or more scanning units.

In accordance with another aspect of the disclosure, a video encoding method includes determining a shape of one or more scanning units each consisting of a predetermined number of adjacent largest coding units from among a plurality of largest coding units split from a picture; generating information indicating the shape of the one or more scanning units; determining a processing order of the one or more scanning units included in a current picture, and a processing order of largest coding units included in each of the one or more scanning units; encoding the plurality of largest coding units included in the current picture according to the determined processing order of the one or more scanning units and the determined processing order of the largest coding units included in each of the one or more scanning units; generating information indicating the processing order of the one or more scanning units, and information indicating the processing order of the largest coding units included in each of the one or more scanning units; and outputting a bitstream of an encoded video, the bitstream including the generated information.

In accordance with another aspect of the disclosure, a video encoding apparatus includes an encoder configured to determine a shape of one or more scanning units each consisting of a predetermined number of adjacent largest coding units from among a plurality of largest coding units split from a picture, to determine a processing order of the one or more scanning units included in a current picture, and a processing order of largest coding units included in each of the one or more scanning units, and to encode the plurality of largest coding units included in the current picture according to the determined processing order of the one or more scanning units and the determined processing order of the largest coding units included in each of the one or more scanning units; an information generator configured to generate information indicating the shape of the one or more scanning units, information indicating the processing order of the one or more scanning units, and information indicating the processing order of the largest coding units included in each of the one or more scanning units; and a bitstream output unit configured to output a bitstream of an encoded video which includes the generated information.

### MODE OF DISCLOSURE

Advantages and features of one or more embodiments of the present disclosure and methods of accomplishing the same may be understood more readily by reference to the following detailed description of the embodiments and the accompanying drawings. In this regard, the present disclosure may, however, be embodied in many different forms and should not be construed as being limited to the embodiments set forth herein. Rather, these embodiments are provided so that this disclosure will be thorough and complete and will fully convey the concept of the present embodiments to one of ordinary skill in the art.

Hereinafter, the terms used in the specification will be briefly defined, and the embodiments will be described in detail.

All terms including descriptive or technical terms which are used herein should be construed as having meanings that are obvious to one of ordinary skill in the art. However, the terms may have different meanings according to the intention of one of ordinary skill in the art, precedent cases, or the appearance of new technologies. Also, some terms may be arbitrarily selected by the applicant, and in this case, the meaning of the selected terms will be described in detail in the detailed description of the disclosure. Thus, the terms used herein have to be defined based on the meaning of the terms together with the description throughout the specification.

An expression used in the singular encompasses the expression of the plural, unless it has a clearly different meaning in the context.

When a part "includes" or "comprises" an element, unless there is a particular description contrary thereto, the part can further include other elements, not excluding the other elements. Also, the term "unit" in the embodiments of the present disclosure means a software component or hardware component such as a field-programmable gate array (FPGA) or an application-specific integrated circuit (ASIC), and performs specific functions. However, the term "unit" is not limited to software or hardware. The "unit" may be formed so as to be in an addressable storage medium, or may be formed so as to operate one or more processors. Thus, for example, the term "unit" may refer to components such as software components, object-oriented software components, class components, and task components, and may include processes, functions, attributes, procedures, subroutines, segments of program code, drivers, firmware, micro codes, circuits, data, a database, data structures, tables, arrays, variables, or the like. A function provided by the components and "units" may be associated with the smaller number of components and "units", or may be divided into additional components and "units"

Hereinafter, an "image" may indicate a static image such as a still image of a video or may indicate a dynamic image such as a moving picture that is the video itself.

Hereinafter, a "sample" is data allocated to a sampling location of an image and may mean data that is a processing target. For example, pixel values in an image of a spatial domain or transform coefficients on a transformation domain may be samples. A unit including one or more of the samples may be defined as a block.

The present disclosure will now be described more fully with reference to the accompanying drawings for one of ordinary skill in the art to be able to perform the present disclosure without any difficulty. In the following description, well-known functions or constructions are not described in detail so as not to obscure the embodiments with unnecessary detail.

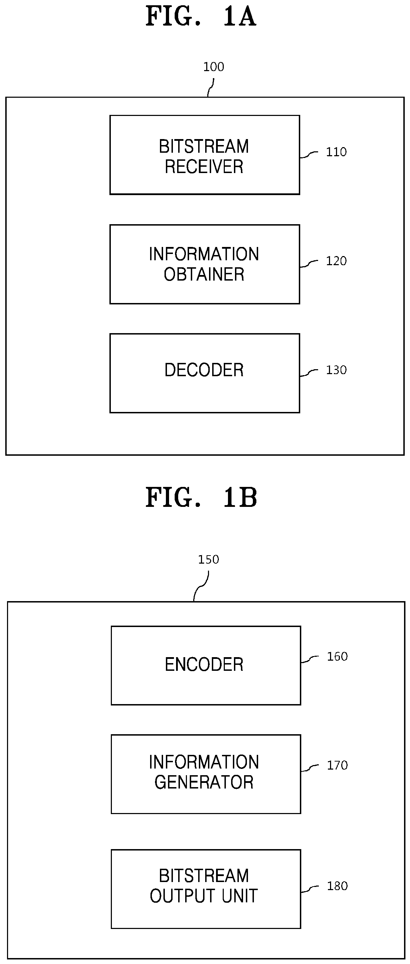

FIG. 1A illustrates a block diagram of a video decoding apparatus 100, according to an embodiment.

As illustrated in FIG. 1A, the video decoding apparatus 100 according to the embodiment may include a bitstream receiver 110, an information obtainer 120, and a decoder 130.

The bitstream receiver 110 may receive a bitstream of an encoded video.

The information obtainer 120 may obtain, from the bitstream, shape information of one or more scanning units each consisting of a predetermined number of adjacent largest coding units from among a plurality of largest coding units split from a picture, processing order information of the one or more scanning units of a current picture, and processing order information of largest coding units included in the one or more scanning units.

The decoder 130 may determine a shape of the one or more scanning units, based on the obtained shape information, may determine a processing order of the one or more scanning units included in the current picture, based on the processing order information of the one or more scanning units, may determine a processing order of largest coding units included in each of the one or more scanning units, based on the processing order information of largest coding units included in the one or more scanning units, and may decode the plurality of largest coding units included in the current picture according to the determined processing order of the one or more scanning units and the determined processing order of the largest coding units included in each of the one or more scanning units.

FIG. 1B illustrates a block diagram of a video encoding apparatus 150, according to an embodiment.

As illustrated in FIG. 1B, the video encoding apparatus 150 according to the present embodiment may include an encoder 160, an information generator 170, and a bitstream output unit 180.

The encoder 160 may determine a shape of one or more scanning units each consisting of a predetermined number of adjacent largest coding units from among a plurality of largest coding units split from a picture, may determine a processing order of the one or more scanning units included in a current picture, and a processing order of largest coding units included in each of the one or more scanning units, and may encode the plurality of largest coding units included in the current picture according to the determined processing order of the one or more scanning units and the determined processing order of the largest coding units included in each of the one or more scanning units.

The information generator 170 may generate information indicating the shape of the one or more scanning units, information indicating the processing order of the one or more scanning units, and information indicating the processing order of the largest coding units included in each of the one or more scanning units.

The bitstream output unit 180 may output a bitstream of an encoded video which includes the generated information.

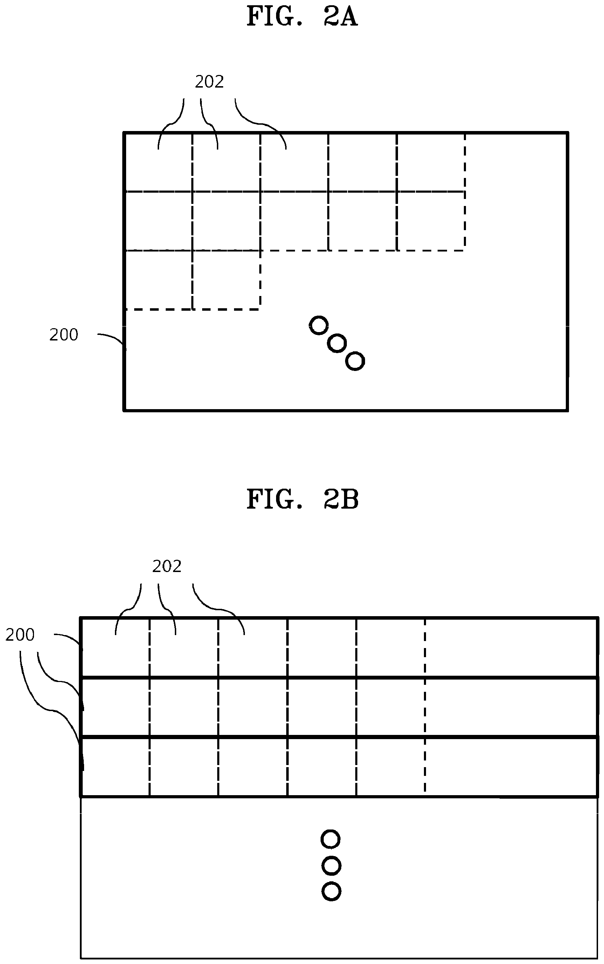

FIGS. 2A to 2D are reference diagrams illustrating shapes of a scanning unit, according to an embodiment.

According to the present embodiment, the scanning unit may consist of a predetermined number of adjacent largest coding units from among a plurality of largest coding units split from a picture.

According to the present embodiment, a largest coding unit may be hierarchically split into one or more coding units having a depth, and a coding unit of a current depth may be split into coding units having a lower depth, independently from neighboring coding units. Coding units of a current depth in a largest coding unit may be decoded according to a processing order of coding units determined with respect to each largest coding unit.

According to the present embodiment, when a shape of a scanning unit is determined, one whole picture may be determined as one scanning unit. For example, as illustrated in FIG. 2A, one picture may be split into a plurality of largest coding units 202 according to a size of a largest coding unit, and a scanning unit 200 may be determined as one picture consisting of the plurality of largest coding units 202, thus, a shape of the scanning unit 200 may have a same size as the picture.

According to the present embodiment, when a shape of a scanning unit is determined, each row of largest coding units may be determined as one scanning unit. For example, as illustrated in FIG. 2B, a predetermined number of largest coding units 202 from among a plurality of largest coding units that split a picture may form one row in the picture. A shape of the scanning unit 200 may be determined as one row of the predetermined number of largest coding units 202. A plurality of the scanning units 200 having the shape may form one picture.

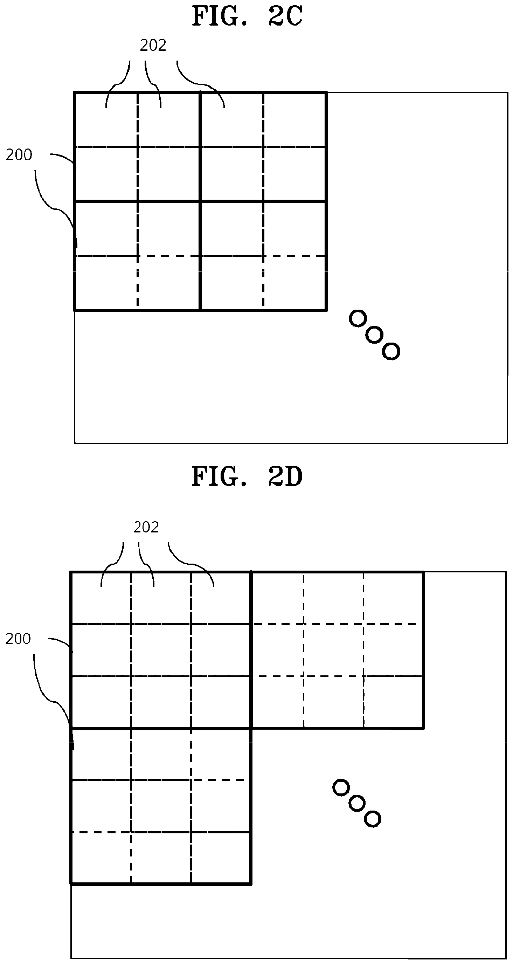

According to the present embodiment, when a shape of a scanning unit is determined, NxM largest coding units may be determined as one scanning unit. In this regard, N and M may each be an integer equal to or greater than 2, and may be equal to or different from each other. For example, as illustrated in FIG. 2C, the scanning unit 200 may consist of 2x2 coding units 202 having a square shape. As illustrated in FIG. 2D, the scanning unit 200 may consist of 3x3 coding units 202 having a square shape. However, a shape of the scanning unit 200 is not limited to the square shape, and may be rectangular when N and M are different from each other. A plurality of the scanning units 200 having the aforementioned shape may form one picture.

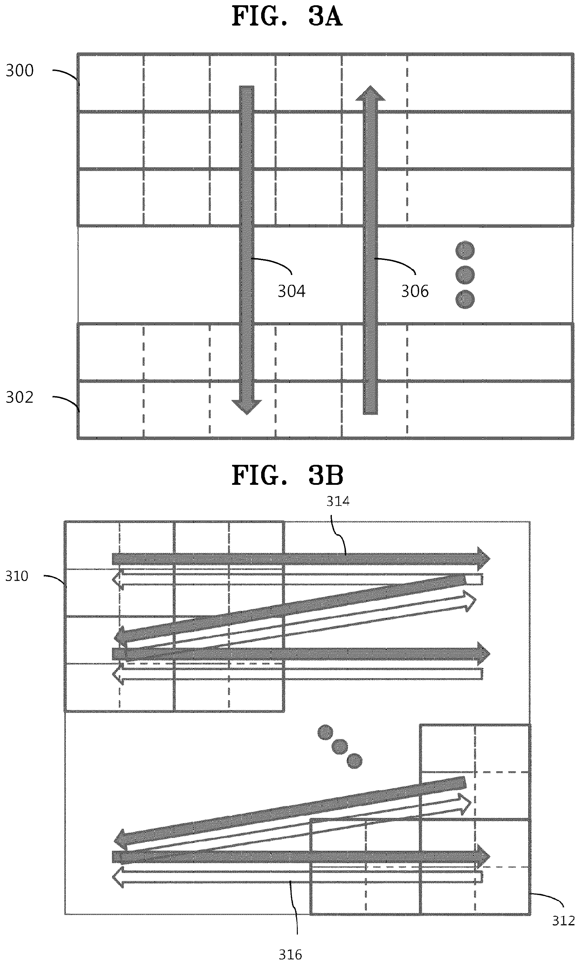

FIGS. 3A to 3C illustrate a processing order of scanning units according to shapes of the scanning units, according to an embodiment.

According to the present embodiment, the processing order of the scanning units may be determined to differ in pictures.

According to the present embodiment, as described above, when a shape of a scanning unit is determined, each row of largest coding units may be determined as one scanning unit. In this case, according to the present embodiment, as illustrated in FIG. 3A, a processing order of one or more scanning units included in a current picture may be determined as one of an order 304 of performing processing in a downward direction from an uppermost scanning unit 300 and an order 306 of performing processing in an upward direction from a lowermost scanning unit 302.

According to the present embodiment, as described above, when a shape of a scanning unit is determined, NxM largest coding units may be determined as one scanning unit. In this case, according to the present embodiment, a processing order of one or more scanning units included in a current picture may be determined as one of a raster scan order 314, an inverse order 316 of the raster scan order 314, a processing order 324 that is equal to the raster scan order 314 in a vertical direction and is opposite to the raster scan order 314 in a horizontal direction, and a processing order 326 that is equal to the raster scan order 314 in the horizontal direction and is opposite to the raster scan order 314 in the vertical direction.

According to the present embodiment, the raster scan order 314 may be an order by which scanning units located at one row are processed in a right direction and then scanning units located at a lower row are processed. As illustrated in FIG. 3B, the raster scan order 314 may start at a scanning unit 310 located at an upper-left corner of a picture and may end at a scanning unit 312 located at a lower-right corner of the picture.

According to the present embodiment, the raster scan order 314 may be applied to a 2x2 array, a 1xN array, and an Nx1 array, according to the aforementioned criterion.

According to the present embodiment, the inverse order 316 of the raster scan order 314 may be an order by which scanning units located at one row are processed in a left direction and then scanning units located at an upper row are processed. As illustrated in FIG. 3B, the inverse order 316 of the raster scan order 314 may start at the scanning unit 312 located at the lower-right corner of the picture and may end at the scanning unit 310 located at the upper-left corner of the picture.

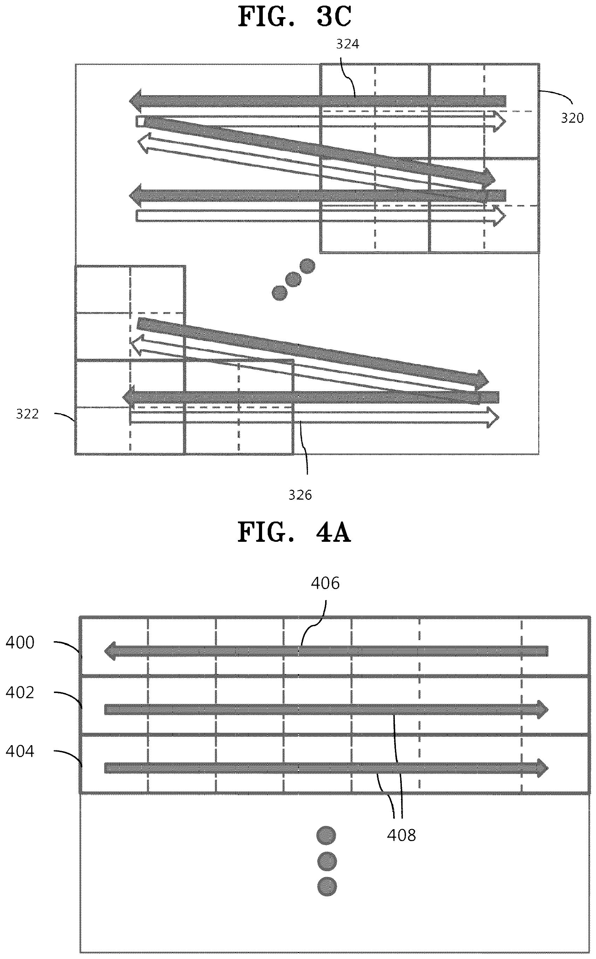

According to the present embodiment, the processing order 324 may be an order by which scanning units located at one row are processed in a left direction and then scanning units located at a lower row are processed. As illustrated in FIG. 3C, the processing order 324 may start at a scanning unit 320 located at an upper-right corner of the picture and may end at a scanning unit 322 located at a lower-left corner of the picture.

According to the present embodiment, the processing order 326 may be an order by which scanning units located at one row are processed in a right direction and then scanning units located at an upper row are processed. As illustrated in FIG. 3C, the processing order 326 may start at the scanning unit 322 located at the lower-left corner of the picture and may end at the scanning unit 320 located at the upper-right corner of the picture.

FIGS. 4A to 4C illustrate a processing order of largest coding units included in a scanning unit, according to an embodiment.

According to the present embodiment, the processing order of the largest coding units included in the scanning unit may be determined to differ in scanning units.

According to the present embodiment, as described above, when a shape of a scanning unit is determined, each row of largest coding units may be determined as one scanning unit. In this case, according to the present embodiment, a processing order of largest coding units included in each of the scanning units may be determined as one of an order 408 of performing processing in a rightward direction from a leftmost largest coding unit in a row of largest coding units and an order 406 of performing processing in a leftward direction from a rightmost largest coding unit in a row of largest coding units.

For example, as illustrated in FIG. 4A, a processing order of largest coding units included in a scanning unit 400 may be determined as the order 406 of performing processing in the leftward direction from the rightmost largest coding unit in the row of largest coding units, and processing orders of largest coding units in scanning units 402 and 404 may be determined as the order 408 of performing processing in the rightward direction from the leftmost largest coding unit in the row of largest coding units.

According to the present embodiment, as described above, when a shape of a scanning unit is determined, NxM largest coding units may be determined as one scanning unit. In this case, according to the present embodiment, a processing order of largest coding units included in each of scanning units may be determined as one of a raster scan order, an inverse order of the raster scan order, a processing order that is equal to the raster scan order in a vertical direction and is opposite to the raster scan order in a horizontal direction, and a processing order that is equal to the raster scan order in the horizontal direction and is opposite to the raster scan order in the vertical direction.

According to the present embodiment, the raster scan order, the inverse order of the raster scan order, the processing order that is equal to the raster scan order in a vertical direction and is opposite to the raster scan order in a horizontal direction, and the processing order that is equal to the raster scan order in the horizontal direction and is opposite to the raster scan order in the vertical direction are equal to those described with reference to FIGS. 3B and 3C, thus, detailed descriptions thereof are omitted here.

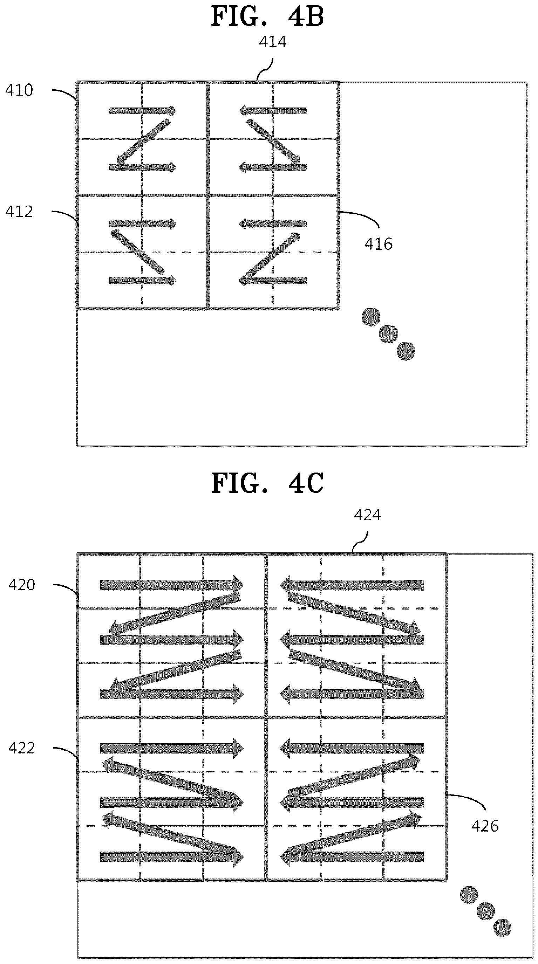

For example, referring to FIGS. 4B and 4C, processing orders of largest coding units included in scanning units 410 and 420 may be determined as the raster scan order, processing orders of largest coding units included in scanning units 416 and 426 may be determined as the inverse order of the raster scan order, processing orders of largest coding units included in scanning units 412 and 422 may be determined as the processing order that is equal to the raster scan order in the vertical direction and is opposite to the raster scan order in the horizontal direction, and processing orders of largest coding units included in scanning units 414 and 424 may be determined as the processing order that is equal to the raster scan order in the horizontal direction and is opposite to the raster scan order in the vertical direction.

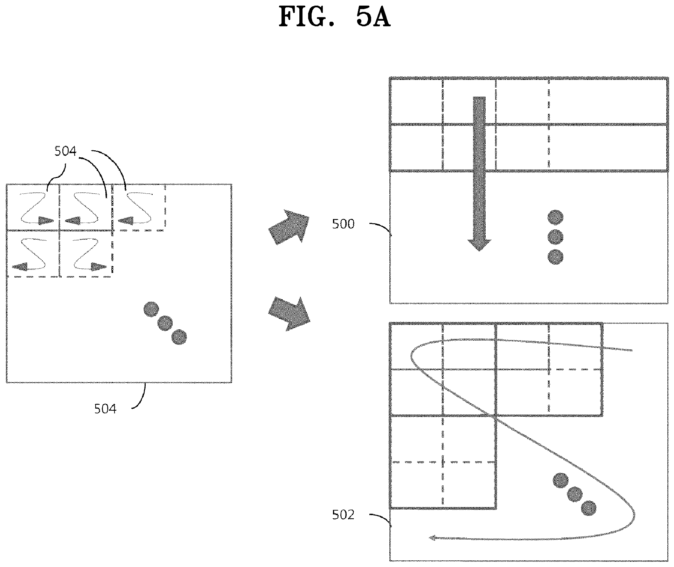

FIG. 5A is a reference diagram for describing a process of determining a processing order of a plurality of scanning units included in current pictures according to an embodiment.

Referring to FIG. 5A, to determine a processing order of one or more scanning units included current pictures 500 and 502, a statistical value may be generated with respect to a processing order of coding units which is determined according to each of largest coding units 504 included in a previous picture 504. Then, based on the generated statistical value, a representative value of a processing order of coding units of a previous picture may be determined. For example, the representative value may be an average value, a most-frequent value, a weighted average value, or the like. According to the present embodiment, a processing order that corresponds to the determined representative value and is from among candidate processing orders usable in the current pictures 500 and 502 may be determined to be the processing order of the one or more scanning units included the current pictures 500 and 502.

According to the present embodiment, the processing order of the coding units which is determined according to each of the largest coding units 504 may be one of a raster scan order, an inverse order of the raster scan order, a processing order that is equal to the raster scan order in a vertical direction and is opposite to the raster scan order in a horizontal direction, and a processing order that is equal to the raster scan order in the horizontal direction and is opposite to the raster scan order in the vertical direction.

According to the present embodiment, to determine the processing order of the one or more scanning units included the current pictures 500 and 502, a representative value that is generated by generating a statistical value of intra prediction modes used in decoding a previous picture may be used, or a representative value of an edge information direction which is generated by extracting, from sample values of the previous picture, edge information included in the previous picture may be used. However, information used to determine the processing order of the one or more scanning units included the current pictures 500 and 502 is not limited to the aforementioned embodiment, and various information including a prediction unit partition, an intra/inter prediction selection ratio, a quantization parameter (QP) value, a transform unit size, a depth of a coding unit, a size of the coding unit, motion information, deblocking/sample adaptive offset (SAO) filtering information, or the like may be used. Also, an area from which the information is extracted is not limited to the previous picture, the information being used to determine the processing order of the one or more scanning units included the current pictures 500 and 502, and various areas may be used.

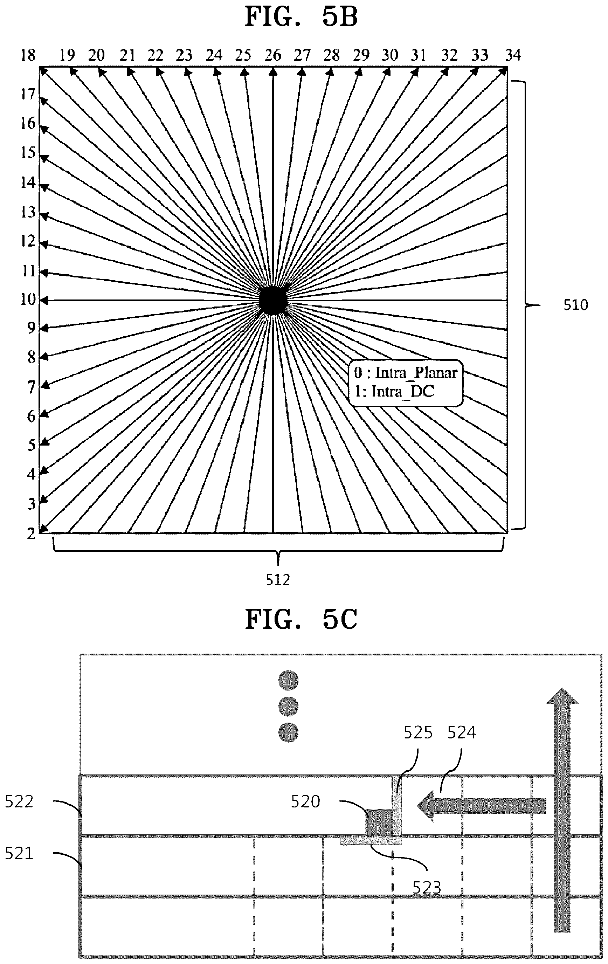

FIG. 5B illustrates intra prediction modes, according to an embodiment.

As described above, according to the present embodiment, to determine a processing order of one or more scanning units included in a current picture, a statistical value of intra prediction modes used when a previous picture is decoded may be used.

According to the high efficiency video coding (HEVC) that is an existing video coding method, degrees 510 indicating a right range and degrees 512 indicating a bottom range are excluded as illustrated in FIG. 5B.

FIG. 5C illustrates a reference sample used when a current block is intra predicted, according to an embodiment.

Referring to FIG. 5C, a processing order of scanning units included in a current picture is determined from a lowermost scanning unit to an upward direction, and after processing of largest coding units included in a scanning unit 521 is completed, processing of a scanning unit 522 including a current block 520 is performed from a rightmost largest coding unit to a left direction 524. Accordingly, processing of pixels 523 adjacent to a bottom of the current block 520 and processing of pixels 525 adjacent to a right end of the current block 520 are completed, such that the pixels 523 and the pixels 525 may be used as reference samples when the current block 520 is intra predicted.

According to the present embodiment, a processing order of scanning units included in a current picture, and a processing order of largest coding units included in each of the scanning units are determined such that a reference sample to be used in intra predicting a current block may extend to pixels adjacent to a bottom of the current block and pixels adjacent to a right end of the current block. Accordingly, intra prediction modes corresponding to the degrees 510 indicating the right range and the degrees 512 indicating the bottom range illustrated in FIG. 5B, which cannot be used in the HEVC, may be used.

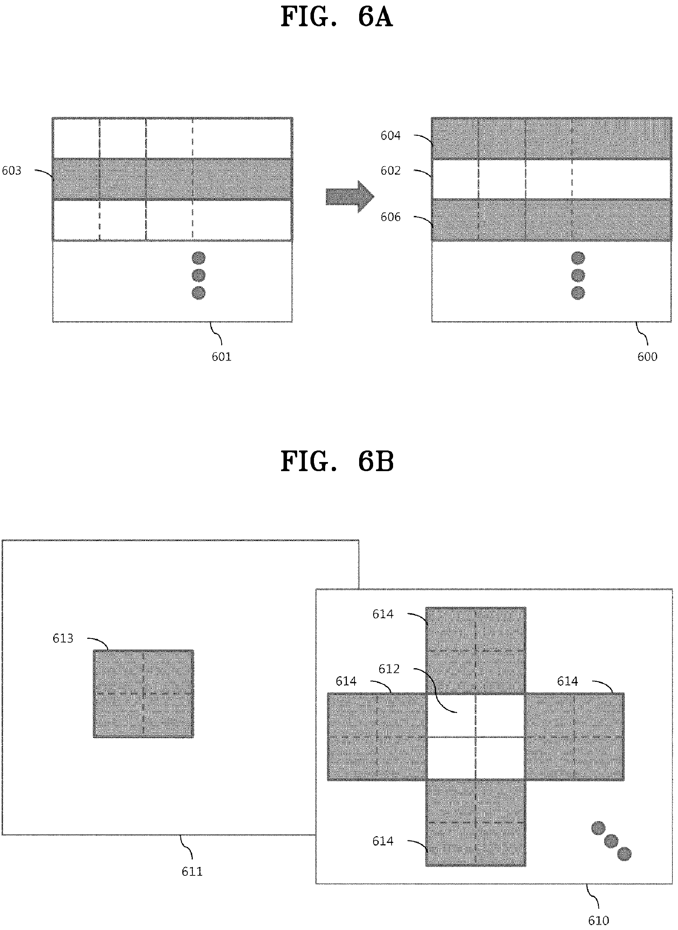

FIGS. 6A and 6B are reference diagrams for describing a process of determining a processing order of a plurality of largest coding units included in a current scanning unit, according to an embodiment.

In FIG. 6A, a current scanning unit 602 has a line shape, and in FIG. 6B, a current scanning unit 612 has a shape of 2x2 largest coding units.

Referring to FIGS. 6A and 6B, an area used to determine a processing order of a plurality of largest coding units included in the current scanning unit 602 may be at least one of scanning units 603 and 613 and adjacent scanning units 604, 606, and 614, wherein the scanning units 603 and 613 are co-located in a previous picture and the adjacent scanning units 604, 606, and 614 are adjacent to the current scanning unit 602 in the current picture. However, an area used to determine the processing order of the plurality of largest coding units included in the current scanning unit is not limited to the embodiment, and various areas may be used.

Information used to determine the processing order of the plurality of largest coding units included in the current scanning unit may be, but is not limited to, edge information extracted from sample values of a predetermined area, a statistical value of intra prediction mode information used to decode the predetermined area, and a statistical value of processing orders of coding units, the processing orders being determined with respect to largest coding units of the predetermined area.

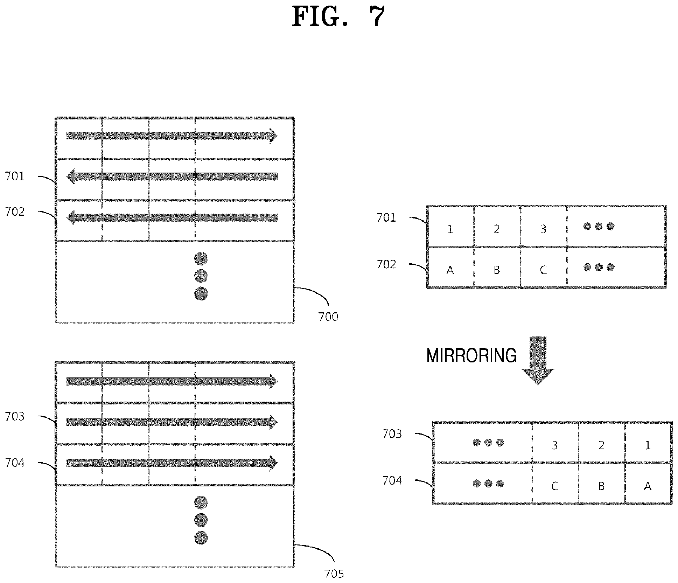

FIG. 7 illustrates a process of mirroring sample values of a scanning unit, without changing a scan order, according to an embodiment.

Referring to FIG. 7, a processing order of largest coding units included in scanning units 701 and 702 from among line-shape scanning units included in a picture 700 may be determined to be an order of performing processing in a leftward direction from a rightmost largest coding unit in a row of largest coding units.

As illustrated in FIG. 7, an array of sample values of the scanning units 701 and 702 corresponds to 1, 2, 3 ... and A, B, C from the left. An array of sample values of scanning units 703 and 704 which are mirrored in a bilateral symmetry manner from the sample values of the scanning units 701 and 702 corresponds to 1, 2, 3 ... and A, B, C from the right.

For a picture 705 including the mirror sample values of the scanning units 703 and 704, a processing order of largest coding units included in the scanning units 703 and 704 may be determined to be an inverse order to a processing order of the scanning units 701 and 702. A result of encoding/decoding the picture 705 including the scanning units 703 and 704 to which mirroring is applied may be equal to a result of encoding/decoding the picture 700 including the scanning units 701 and 702 for which the processing order is inversely determined. That is, a change in a scan order may be substituted by mirroring sample values of a scanning unit.

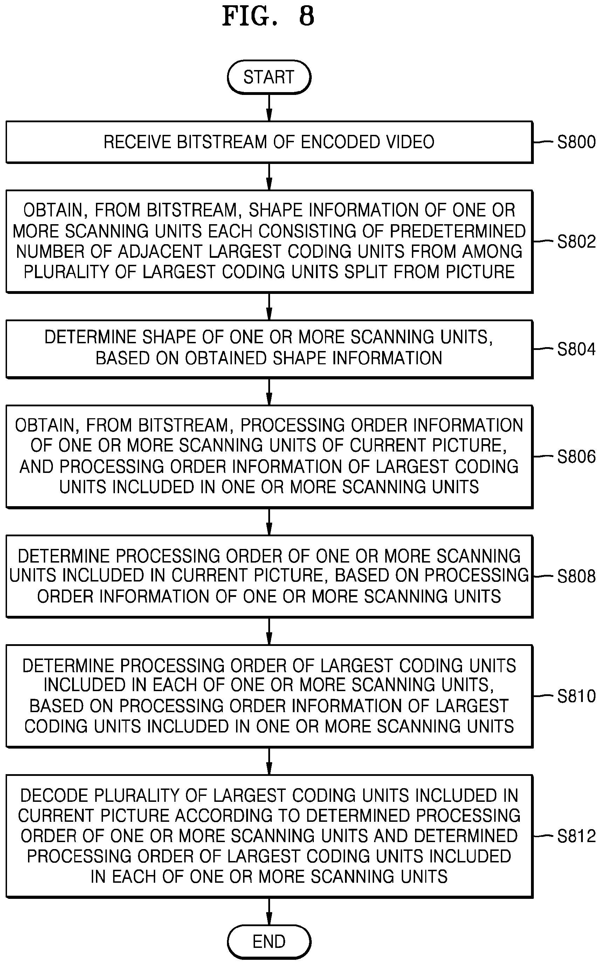

FIG. 8 illustrates a flowchart of a video decoding method, according to an embodiment.

In operation S800, the bitstream receiver 110 of the video decoding apparatus 100 may receive a bitstream of an encoded video.

In operation S802, the information obtainer 120 of the video decoding apparatus 100 may obtain, from the bitstream, shape information of one or more scanning units each consisting of a predetermined number of adjacent largest coding units from among a plurality of largest coding units split from a picture.

In operation S804, the decoder 130 of the video decoding apparatus 100 may determine a shape of the one or more scanning units, based on the obtained shape information.

In operation S806, the information obtainer 120 of the video decoding apparatus 100 may obtain, from the bitstream, processing order information of the one or more scanning units of a current picture, and processing order information of largest coding units included in the one or more scanning units.

In operation S808, the decoder 130 of the video decoding apparatus 100 may determine a processing order of the one or more scanning units included in the current picture, based on the processing order information of the one or more scanning units.

In operation S810, the decoder 130 of the video decoding apparatus 100 may determine a processing order of largest coding units included in each of the one or more scanning units, based on the processing order information of largest coding units included in the one or more scanning units.

In operation S812, the decoder 130 of the video decoding apparatus 100 may decode the plurality of largest coding units included in the current picture according to the determined processing order of the one or more scanning units and the determined processing order of the largest coding units included in each of the one or more scanning units.

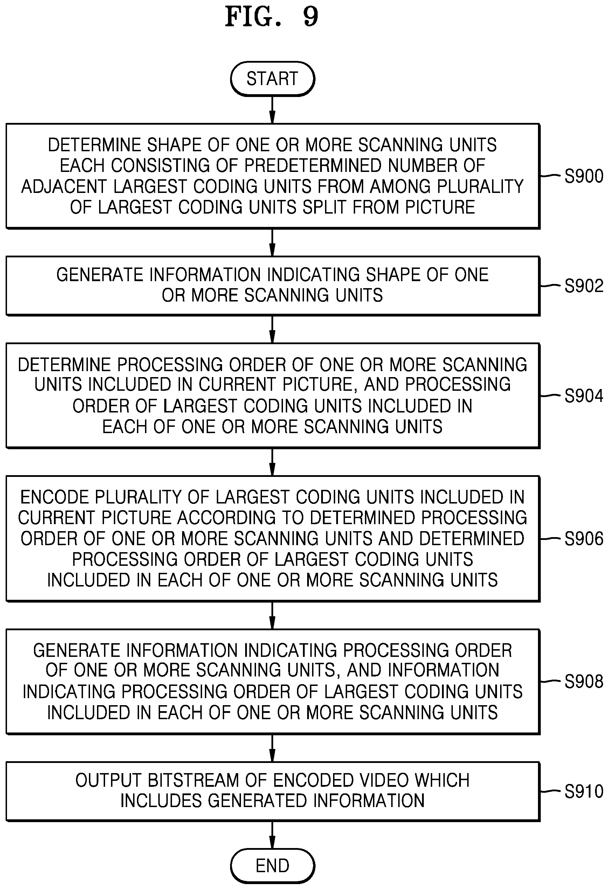

FIG. 9 illustrates a flowchart of a video encoding method, according to an embodiment.

In operation S900, the encoder 160 of the video encoding apparatus 150 may determine a shape of one or more scanning units each consisting of a predetermined number of adjacent largest coding units from among a plurality of largest coding units split from a picture.

In operation S902, the information generator 170 of the video encoding apparatus 150 may generate information indicating the shape of the one or more scanning units.

In operation S904, the encoder 160 of the video encoding apparatus 150 may determine a processing order of the one or more scanning units included in a current picture, and a processing order of largest coding units included in each of the one or more scanning units.

In operation S906, the encoder 160 of the video encoding apparatus 150 may encode the plurality of largest coding units included in the current picture according to the determined processing order of the one or more scanning units and the determined processing order of the largest coding units included in each of the one or more scanning units.

In operation S908, the information generator 170 of the video encoding apparatus 150 may generate information indicating the processing order of the one or more scanning units, and information indicating the processing order of the largest coding units included in each of the one or more scanning units.

In operation S910, the bitstream output unit 180 of the video encoding apparatus 150 may output a bitstream of an encoded video which includes the generated information.

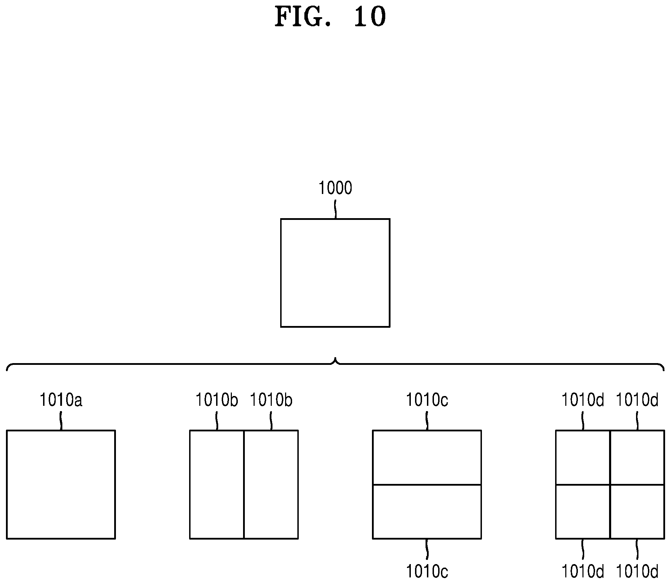

Hereinafter, with reference to FIGS. 10 to 23, a method of determining a data unit that is usable when the video decoding apparatus 100 according to an embodiment decodes an image will now be described. Operations by the video encoding apparatus 150 may be similar to or opposite to various embodiments of operations by the video decoding apparatus 100 which will now be described.

FIG. 10 illustrates a process of determining at least one coding unit when the video decoding apparatus 100 splits a current coding unit, according to an embodiment.

According to the present embodiment, the video decoding apparatus 100 may determine, by using block shape information, a shape of a coding unit, and may determine, by using split shape information, a shape according to which the coding unit is to be split. That is, a method of splitting a coding unit, which is indicated by the split shape information, may be determined based on which block shape is indicated by the block shape information used by the video decoding apparatus 100.

According to the present embodiment, the video decoding apparatus 100 may use the block shape information indicating that a current coding unit has a square shape. For example, the video decoding apparatus 100 may determine whether to split a square coding unit or not, whether to split the square coding unit vertically, whether to split the square coding unit horizontally, or whether to split the square coding unit into four coding units, according to the split shape information. Referring to FIG. 10, when block shape information of a current coding unit 1000 indicates a square shape, the video decoding apparatus 100 may not split a coding unit 1010a having the same size as the current coding unit 1000 according to split shape information indicating no split, or may determine coding units 1010b, 1010c, and 1010d split based on split shape information indicating a predetermined split method.

Referring to FIG. 10, the video decoding apparatus 100 may determine the two coding units 1010b obtained by splitting the current coding unit 1000 in a vertical direction based on split shape information indicating split in a vertical direction, according to an embodiment. The video decoding apparatus 100 may determine the two coding units 1010c obtained by splitting the current coding unit 1000 in a horizontal direction based on split shape information indicating split in a horizontal direction. The video decoding apparatus 100 may determine the four coding units 1010d obtained by splitting the current coding unit 1000 in vertical and horizontal directions based on split shape information indicating split in vertical and horizontal directions. However, a split shape for splitting a square coding unit may not be limitedly interpreted to above shapes, and may include various shapes indicatable by split shape information. Predetermined split shapes for splitting a square coding unit will be described in detail below through various embodiments.

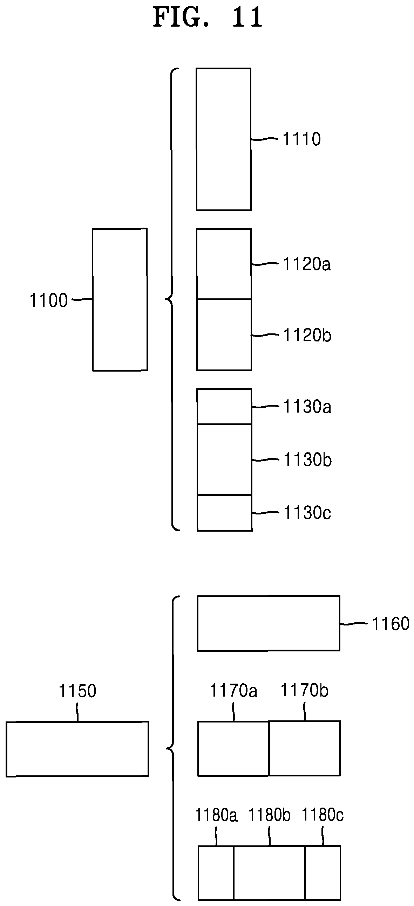

FIG. 11 illustrates a process of determining at least one coding unit when the video decoding apparatus 100 splits a coding unit having non-square shape, according to an embodiment.

According to the present embodiment, the video decoding apparatus 100 may use block shape information indicating that a current coding unit has a non-square shape. The video decoding apparatus 100 may determine whether or not to split the current coding unit having the non-square shape, or whether to split the current coding unit having the non-square shape by using a predetermined method. Referring to FIG. 11, when block shape information of a current coding unit 1100 or 1150 indicates a non-square shape, the video decoding apparatus 100 may not split a coding unit 1110 or 1160 having the same size as the current coding unit 1100 or 1150 according to split shape information indicating no split, or may determine coding units 1120a, 1120b, 1130a, 1130b, 1130c, 1170a, 1170b, 1180a, 1180b, and 1180c split according to split shape information indicating a predetermined split method. A predetermined split method of splitting a non-square coding unit will be described in detail below through various embodiments.

According to the present embodiment, the video decoding apparatus 100 may determine, by using the split shape information, a shape of a coding unit is split, and in this case, the split shape information may indicate the number of at least one coding unit generated when a coding unit is split. Referring to FIG. 11, when the split shape information indicates that the current coding unit 1100 or 1150 is split into two coding units, the video decoding apparatus 100 may determine the two coding units 1120a and 1120b or 1170a and 1170b, which are respectively included in the current coding unit 1100 or 1150 by splitting the current coding unit 1100 or 1150 based on the split shape information.

According to the present embodiment, when the video decoding apparatus 100 splits the current coding unit 1100 or 1150 having the non-square shape based on the split shape information, the video decoding apparatus 100 may split the current coding unit 1100 or 1150 having the non-square shape in consideration of a location of a longer side. For example, the video decoding apparatus 100 may determine a plurality of coding units by splitting the current coding unit 1100 or 1150 in a direction of splitting the longer sides of the current coding unit 1100 or 1150 in consideration of the shape of the current coding unit 1100 or 1150.

According to the present embodiment, when split shape information indicates that a coding unit is split into an odd number of blocks, the video decoding apparatus 100 may determine an odd number of coding units included in the current coding unit 1100 or 1150. For example, when split shape information indicates that the current coding unit 1100 or 1150 is split into three coding units, the video decoding apparatus 100 may split the current coding unit 1100 or 1150 into the three coding units 1130a, 1130b, and 1130c or 1180a, 1180b, and 1180c. According to the present embodiment, the video decoding apparatus 100 may determine the odd number of coding units included in the current coding unit 1100 or 1150, wherein sizes of the determined coding units are not the same. For example, a size of the coding unit 1130b or 1180b from among the odd number of coding units 1130a, 1130b, and 1130c or 1180a, 1180b, and 1180c may be different from sizes of the coding units 1130a and 1130c or 1180a or 1180c. That is, coding units that may be determined when the current coding unit 1100 or 1150 is split may have different types of sizes, and in another example, sizes of the odd number of coding units 1130a, 1130b, and 1130c or 1180a, 1180b, and 1180c may be different from each other.

According to the present embodiment, when split shape information indicates that a coding unit is split into an odd number of blocks, the video decoding apparatus 100 may determine an odd number of coding units included in the current coding unit 1100 or 1150 and in addition, set a predetermined limit on at least one coding unit from among the odd number of coding units generated by splitting the current coding unit 1100 or 1150. Referring to FIG. 11, the video decoding apparatus 100 may decode the coding unit 1130b or 1180b at the center of the three coding units 1130a, 1130b, and 1130c or 1180a, 1180b, and 1180c generated when the current coding unit 1100 or 1150 is split in a different manner from the coding units 1130a and 1130c or 1180a and 1180c. For example, the video decoding apparatus 100 may limit the coding unit 1130b or 1180b at the center not to be further split unlike the coding units 1130a and 1130c or 1180a and 1180c, or to be split only a certain number of times.

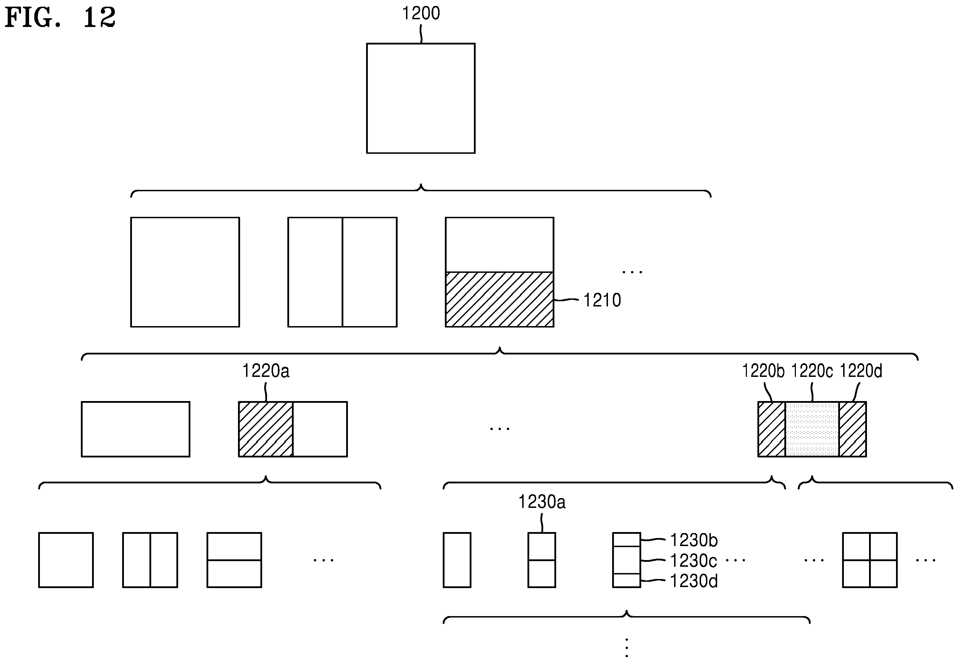

FIG. 12 illustrates a process of splitting, by the video decoding apparatus 100, a coding unit based on at least one of block shape information and split shape information, according to an embodiment.

According to the present embodiment, the video decoding apparatus 100 may determine whether to split a first coding unit 1200 having a square shape into coding units based on at least one of block shape information and split shape information. According to the present embodiment, when the split shape information indicates splitting of the first coding unit 1200 in a horizontal direction, the video decoding apparatus 100 may determine a second coding unit 1210 by splitting the first coding unit 1200 in the horizontal direction. The terms "first coding unit", "second coding unit", and "third coding unit" according to an embodiment are used in the context of splitting a coding unit. For example, a second coding unit may be determined when a first coding unit is split and a third coding unit may be determined when the second coding unit is split. Relationships between the first through third coding units used hereinafter may be understood to follow the above order characteristics.

According to the present embodiment, the video decoding apparatus 100 may determine whether to split the determined second coding unit 1210 into coding units based on at least one of block shape information and split shape information. Referring to FIG. 12, the video decoding apparatus 100 may split the second coding unit 1210, which has a non-square shape determined by splitting the first coding unit 1200, into at least one third coding unit, for example, third coding units 1220a, 1220b, 1220c, and 1220d, based on at least one of block shape information and split shape information, or may not split the second coding unit 1210. The video decoding apparatus 100 may obtain at least one of block shape information and split shape information, the video decoding apparatus 100 may split the first coding unit 1200 based on at least one of the block shape information and the split shape information to obtain a plurality of second coding units (for example, the second coding unit 1210) having various shapes, and the second coding unit 1210 may be split according to a manner of splitting the first coding unit 1200 based on at least one of the block shape information and the split shape information. According to the present embodiment, when the first coding unit 1200 is split into the second coding units 1210 based on at least one of block shape information and split shape information about the first coding unit 1200, the second coding unit 1210 may also be split into the third coding units, for example, the third coding units 1220a, 1220b, and 1220c, 1220d, based on at least one of block shape information and split shape information about the second coding unit 1210. That is, a coding unit may be recursively split based on at least one of split shape information and block shape information related to the coding unit. Thus, a coding unit having a square shape may be determined from a coding unit having a non-square shape, and coding units each having a non-square shape may be determined by recursively split the coding unit having a square shape. Referring to FIG. 12, a predetermined coding unit (e.g., a coding unit located at the center or a coding unit having a square shape) from among an odd number of the third coding units 1220b, 1220c, and 1220d determined by splitting the second coding unit 1210 having a non-square shape may be recursively split. According to the present embodiment, the third coding unit 1220c having a square shape and from among the odd number of the third coding units 1220b, 1220c, and 1220d may be horizontally split into a plurality of fourth coding units.

A method used to recursively split a coding unit will be described below through various embodiments.

According to the present embodiment, the video decoding apparatus 100 may determine to split each of the third coding units (for example, the third coding units 1220a, 1220b, 1220c, 1220d, or the like) into coding units or not to split the second coding unit 1210, based on at least one of block shape information and split shape information. The video decoding apparatus 100 may split the second coding unit 1210 having a non-square shape into the odd number of third coding units 1220b, 1220c, and 1220d. The video decoding apparatus 100 may set a predetermined limitation on a predetermined third coding unit from among the odd number of third coding units 1220b, 1220c, and 1220d. For example, the video decoding apparatus 100 may limit the coding unit 1220c located at the center from among the odd number of third coding units 1220b, 1220c, and 1220d to be split no more or to be split to a settable number of times. Referring to FIG. 12, the video decoding apparatus 100 may limit the coding unit 1220c located at the center from among the odd number of third coding units 1220b, 1220c, and 1220d included in the second coding unit 1210 having a non-square shape to be split no more, to be split into a predetermined split manner (for example, split only into four coding units or split into a shape corresponding to that into which the second coding unit 1210 is split), or to be split only a predetermined number of times (for example, split only n times, wherein n>0). However, the limitations on the coding unit 1220c located at the center are simply embodiments, and thus the present disclosure should not be interpreted limitedly to the above embodiments, and it should be interpreted that the limitations include various limitations of decoding the coding unit 1220c located at the center differently from the coding units 1220b and 1220d.

According to the present embodiment, the video decoding apparatus 100 may obtain, from a predetermined location in a current coding unit, at least one of block shape information and split shape information used to split the current coding unit.

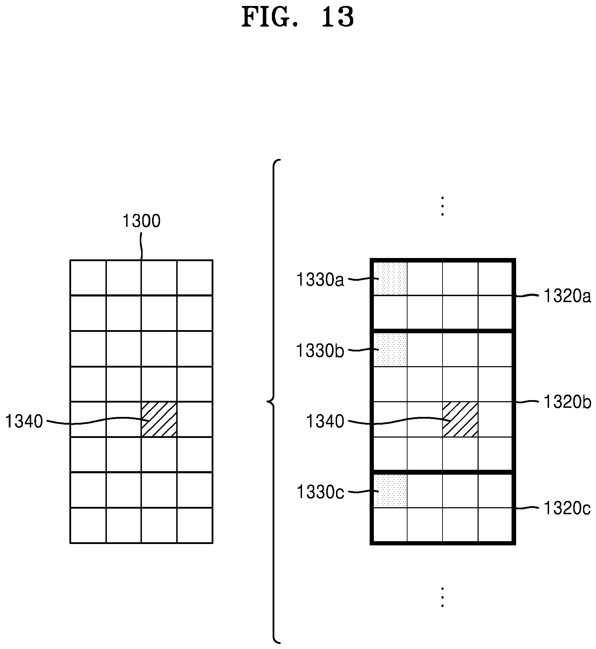

FIG. 13 illustrates a method of determining, by the video decoding apparatus 100, a predetermined coding unit from among an odd number of coding units, according to an embodiment. Referring to FIG. 13, at least one of block shape information and split shape information of a current coding unit 1300 may be obtained from a sample at a predetermined location (for example, a sample 1340 located at the center) from among a plurality of samples included in the current coding unit 1300. However, the predetermined location in the current coding unit 1300 for obtaining at least one of the block shape information and the split shape information should not be limitedly interpreted to the center in FIG. 13, but should be interpreted to include various locations (for example, uppermost, lowermost, left, right, upper left, lower left, upper right, lower right locations, or the like) in the current coding unit 1300. The video decoding apparatus 100 may obtain at least one of the block shape information and the split shape information from the predetermined location to determine to split or not to split the current coding unit into coding units having various shapes and sizes.

According to the present embodiment, when the current coding unit is split into a predetermined number of coding units, the video decoding apparatus 100 may select one of the coding units. A method of selecting one of a plurality of coding units may vary, and descriptions about such a method will be described below through various embodiments.

According to the present embodiment, the video decoding apparatus 100 may split the current coding unit into the plurality of coding units, and may determine the coding unit at the predetermined location.

FIG. 13 illustrates a method of determining, by the video decoding apparatus 100, a coding unit at a predetermined location from among an odd number of coding units, according to an embodiment.

According to the present embodiment, the video decoding apparatus 100 may use information indicating a location of each of an odd number of coding units so as to determine a coding unit located at the center of the odd number of coding units. Referring to FIG. 13, the video decoding apparatus 100 may determine an odd number of coding units 1320a, 1320b, and 1320c by splitting a current coding unit 1300. The video decoding apparatus 100 may determine the coding unit 1320b at the center by using information about locations of the odd number of coding units 1320a, 1320b, and 1320c. For example, the video decoding apparatus 100 may determine the coding unit 1320 located at the center by determining locations of the coding units 1320a, 1320b, and 1320c based on information indicating locations of predetermined samples included in the coding units 1320a, 1320b, and 1320c. In detail, the video decoding apparatus 100 may determine the coding unit 1320b located at the center by determining the locations of the coding units 1320a, 1320b, and 1320c based on information indicating locations of upper left samples 1330a, 1330b, and 1330c of the coding units 1320a, 1320b, and 1320c.

According to the present embodiment, the information indicating the locations of the upper left samples 1330a, 1330b, and 1330c respectively included in the coding units 1320a, 1320b, and 1320c may include information about locations or coordinates in a picture of the coding units 1320a, 1320b, and 1320c. According to the present embodiment, the information indicating the locations of the upper left samples 1330a, 1330b, and 1330c respectively included in the coding units 1320a, 1320b, and 1320c may include information indicating widths or heights of the coding units 1320a, 1320b, and 1320c included in the current coding unit 1300, wherein the widths or heights may correspond to information indicating differences between coordinates in the picture of the coding units 1320a, 1320b, and 1320c. That is, the video decoding apparatus 100 may determine the coding unit 1320b located at the center by directly using the information about the locations or coordinates in the picture of the coding units 1320a, 1320b, and 1320c, or by using the information about the widths or heights of the coding units, which indicate difference values between coordinates.

According to the present embodiment, the information indicating the location of the upper left sample 1330a of the top coding unit 1320a may indicate (xa, ya) coordinates, information indicating the location of the upper left sample 1330b of the center coding unit 1320b may indicate (xb, yb) coordinates, and the information indicating the location of the upper left sample 1330c of the bottom coding unit 1320c may indicate (xc, yc) coordinates. The video decoding apparatus 100 may determine the center coding unit 1320b by using the coordinates of the upper left samples 1330a, 1330b, and 1330c respectively included in the coding units 1320a, 1320b, and 1320c. For example, when the coordinates of the upper left samples 1330a, 1330b, and 1330c are aligned in an ascending order or descending order, the center coding unit 1320b including (xb, yb) that is coordinates of the upper left sample 1330b may be determined as a coding unit located at the center from among the coding units 1320a, 1320b, and 1320c determined when the current coding unit 1300 is split. Here, the coordinates indicating the locations of the upper left samples 1330a, 1330b, and 1330c may indicate coordinates indicating absolute locations in the picture, and further, may use (dxb, dyb) coordinates that are information indicating a relative location of the upper left sample 1330b of the center coding unit 1320b and (dxc, dyc) coordinates that are information indicating a relative location of the upper left sample 1330c of the bottom coding unit 1320c, based on the location of the upper left sample 1330c of the top coding unit 1320a. Also, a method of determining a coding unit at a predetermined location by using coordinates of a sample included in a coding unit as information indicating a location of the sample should not be limitedly interpreted to the above method, and may be interpreted to various arithmetic methods capable of using coordinates of a sample.

According to the present embodiment, the video decoding apparatus 100 may split the current coding unit 1300 into the plurality of coding units 1320a, 1320b, and 1320c, and select a coding unit from among the coding units 1320a, 1320b, and 1320c according to a predetermined criterion. For example, the video decoding apparatus 100 may select the coding unit 1320b that has a different size from among the coding units 1320a, 1320b, and 1320c.

According to the present embodiment, the video decoding apparatus 100 may determine the width or height of each of the coding units 1320a, 1320b, and 1320c by using the (xa, ya) coordinates that are the information indicating the location of the upper left sample 1330a of the top coding unit 1320a, the (xb, yb) coordinates that are the information indicating the location of the upper left sample 1330b of the center coding unit 1320b, and the (xc, yc) coordinates that are the information indicating the location of the upper left sample 1330c of the bottom coding unit 1320c. The video decoding apparatus 100 may determine a size of each of the coding units 1320a, 1320b, and 1320c by using the coordinates (xa, ya), (xb, yb), and (xc, yc) indicating the locations of the coding units 1320a, 1320b, and 1320c.

According to an embodiment, the video decoding apparatus 100 may determine the width of the top coding unit 1320a to xb-xa and the height to yb-ya. According to the embodiment, the video decoding apparatus 100 may determine the width of the center coding unit 1320b to xc-xb and the height to yc-yb. According to the present embodiment, the video decoding apparatus 100 may determine the width or height of the bottom coding unit by using the width or height of the current coding unit, and the width and height of the top coding unit 1320a and the center coding unit 1320b. The video decoding apparatus 100 may determine one coding unit having a size different from other coding units based on the determined widths and heights of the coding units 1320a, 1320b, and 1320c. Referring to FIG. 13, the video decoding apparatus 100 may determine, as the coding unit at the predetermined location, the center coding unit 1320b having a size different from sizes of the top coding unit 1320a and the bottom coding unit 1320c. However, since a process of determining, by the video decoding apparatus 100, a coding unit having a size different from other coding units is only an embodiment of determining a coding unit at a predetermined location by using sizes of coding units determined based on sample coordinates, various processes of determining a coding unit at a predetermined location by comparing sizes of coding units determined according to predetermined sample coordinates may be used.

However, a location of a sample considered to determine a location of a coding unit should not be limitedly interpreted to the upper left, but may be interpreted that information about a location of an arbitrary sample included in a coding unit is usable.

According to the present embodiment, the video decoding apparatus 100 may select a coding unit at a predetermined location from among an odd number of coding units that are determined when a current coding unit is split, in consideration of a shape of the current coding unit. For example, when the current coding unit has a non-square shape in which a width is longer than a height, the video decoding apparatus 100 may determine the coding unit at the predetermined location along a horizontal direction. In other words, the video decoding apparatus 100 may determine a coding unit from among coding units having different locations in the horizontal direction, and may set a limitation on the coding unit. When the current coding unit has the non-square shape in which the height is longer than the width, the video decoding apparatus 100 may determine the coding unit at the predetermined location along a vertical direction. In other words, the video decoding apparatus 100 may determine a coding unit from among coding units having different locations in the vertical direction, and set a limitation on the coding unit.

According to the present embodiment, the video decoding apparatus 100 may use information indicating a location of each of an even number of coding units in order to determine a coding unit at a predetermined location from among the even number of coding units. The video decoding apparatus 100 may determine the even number of coding units by splitting a current coding unit, and determine the coding unit at the predetermined location by using the information about the locations of the even number of coding units. Detailed processes thereof may correspond to processes of determining a coding unit at a predetermined location (for example, a center location) from among an odd number of coding units, which have been described above with reference to FIG. 13, and thus descriptions thereof are not provided again.

According to the present embodiment, when a current coding unit having a non-square shape is split into a plurality of coding units, predetermined information about a coding unit at a predetermined location may be used during a split process in order to determine the coding unit at the predetermined location from among the plurality of coding units. For example, the video decoding apparatus 100 may use at least one of block shape information and split shape information, which are stored in a sample included in a center coding unit during a split process in order to determine a coding unit located at the center from among a plurality of coding units obtained by splitting a current coding unit.

Referring to FIG. 13, the video decoding apparatus 100 may split the current coding unit 1300 into the plurality of coding units 1320a, 1320b, and 1320c based on at least one of block shape information and split shape information, and determine the coding unit 1320b located at the center from among the plurality of coding units 1320a, 1320b, and 1320c. In addition, the video decoding apparatus 100 may determine the coding unit 1320b located at the center in consideration of a location where at least one of the block shape information and the split shape information is obtained. That is, at least one of the block shape information and the split shape information of the current coding unit 1300 may be obtained from the sample 1340 located at the center of the current coding unit 1300, and when the current coding unit 1300 is split into the plurality of coding units 1320a, 1320b, and 1320c based on at least one of the block shape information and the split shape information, the coding unit 1320b including the sample 1340 may be determined as the coding unit located at the center. However, information used to determine a coding unit located at the center should not be limitedly interpreted to at least one of block shape information and split shape information, and various types of information may be used during a process of determining a coding unit located at the center.

According to the present embodiment, predetermined information for identifying a coding unit at a predetermined location may be obtained from a predetermined sample included in a coding unit to be determined. Referring to FIG. 13, the video decoding apparatus 100 may use at least one of block shape information and split shape information obtained from a sample located at a predetermined location in the current coding unit 1300 (for example, a sample located at the center of the current coding unit 1300) in order to determine a coding unit at a predetermined location from among the plurality of coding units 1320a, 1320b, and 1320c determined when the current coding unit 1300 is split (for example, a coding unit located at the center from among the plurality of coding units). That is, the video decoding apparatus 100 may determine the sample at the predetermined location in consideration of a block shape of the current coding unit 1300, and the video decoding apparatus 100 may determine and set a predetermined limitation on the coding unit 1320b including the sample from which predetermined location (for example, at least one of the block shape information and the split shape information) is obtained, from among the plurality of coding units 1320a, 1320b, and 1320c determined when the current coding unit 1300 is split. Referring to FIG. 13, the video decoding apparatus 100 may determine the sample 1340 located at the center of the current coding unit 1300, as the sample from which the predetermined information is obtained, and the video decoding apparatus 100 may set the predetermined location during a decoding process, on the coding unit 1320b including the sample 1340. However, a location of a sample from which predetermined information is obtained should not be limitedly interpreted to the above location, and the sample may be interpreted to samples at arbitrary locations included in the coding unit 1320 determined to be limited.

According to the present embodiment, a location of a sample from which predetermined location is obtained may be determined based on a shape of the current coding unit 1300. According to the present embodiment, block shape information may be used to determine whether a shape of a current coding unit is a square or a non-square, and a location of a sample from which predetermined information is obtained may be determined based on the shape. For example, the video decoding apparatus 100 may determine, as a sample from which predetermined information is obtained, a sample located on a boundary of splitting at least one of a width and a height of a current coding unit into halves by using at least one of information about the width of the current coding unit and information about the height of the current coding unit. As another example, when block shape information about a current coding unit indicates a non-square shape, the video decoding apparatus 100 may determine, as a sample from which predetermined information is obtained, one of samples adjacent to a boundary of splitting a longer side of the current coding unit into halves.

According to the present embodiment, when a current coding unit is split into a plurality of coding units, the video decoding apparatus 100 may use at least one of block shape information and split shape information in order to determine a coding unit at a predetermined location from among the plurality of coding units. According to an embodiment, the video decoding apparatus 100 may obtain at least one of the block shape information and the split shape information from a sample at a predetermined location included in the coding unit, and the video decoding apparatus 100 may split the plurality of coding units generated when the current coding unit is split by using at least one of the split shape information and the block shape information obtained from the sample at the predetermined location included in each of the plurality of coding units. In other words, the coding unit may be recursively split by using at least one of the block shape information and the split shape information obtained from the sample at the predetermined location in each coding unit. Since a recursive split process of a coding unit has been described above with reference to FIG. 12, detail descriptions thereof are not provided again.

According to the present embodiment, the video decoding apparatus 100 may determine at least one coding unit by splitting a current coding unit, and determine an order of decoding the at least one coding unit according to a predetermined block (for example, a current coding unit).

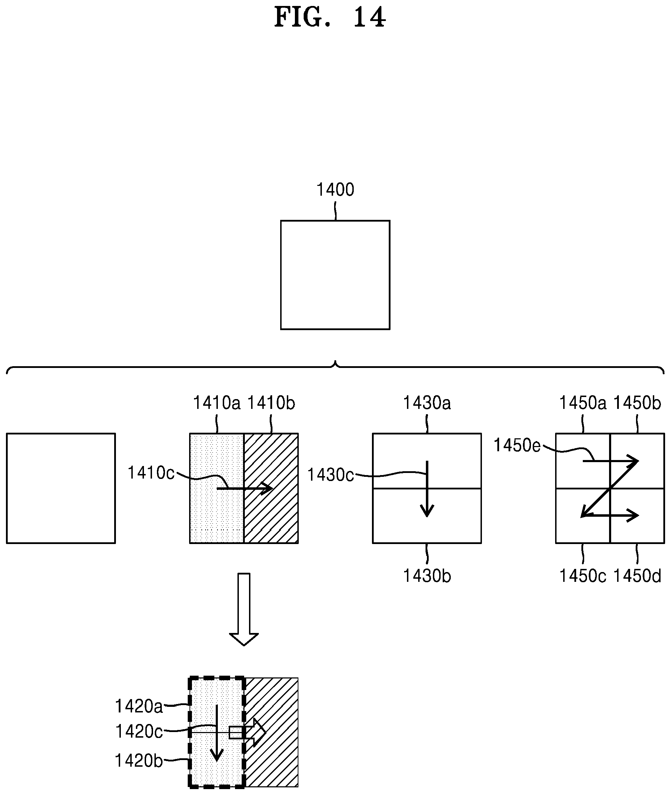

FIG. 14 illustrates an order of processing a plurality of coding units when the video decoding apparatus 100 determines the plurality of coding units by splitting a current coding unit, according to an embodiment.

According to the present embodiment, the video decoding apparatus 100 may determine, according to block shape information and split shape information, second coding units 1410a and 1410b by splitting a first coding unit 1400 in a vertical direction, second coding units 1430a and 1430b by splitting the first coding unit 1400 in a horizontal direction, or second coding units 1450a, 1450b, 1450c, and 1450d by splitting the first coding unit 1400 in vertical and horizontal directions.

Referring to FIG. 14, the video decoding apparatus 100 may determine an order such that the second coding units 1410a and 1410b determined by splitting the first coding unit 1400 in the vertical direction to be processed in a horizontal direction 1410c. The video decoding apparatus 100 may determine a processing order of the second coding units 1430a and 1430b determined by splitting the first coding unit 1400 in the horizontal direction to be in a vertical direction 1430c. The video decoding apparatus 100 may determine the second coding units 1450a, 1450b, 1450c, and 1450d determined by splitting the first coding unit 1400 in the vertical and horizontal directions to be processed according to a predetermined order (for example, a raster scan order or a z-scan order 1450e) in which coding units in one row are processed and then coding units in a next row are processed.

According to the present embodiment, the video decoding apparatus 100 may recursively split coding units. Referring to FIG. 14, the video decoding apparatus 100 may determine a plurality of coding units 1410a, 1410b, 1430a, 1430b, 1450a, 1450b, 1450c, and 1450d by splitting the first coding unit 1400, and may recursively split each of the determined plurality of coding units 1410a, 1410b, 1430a, 1430b, 1450a, 1450b, 1450c, and 1450d. A method of splitting the plurality of coding units 1410a, 1410b, 1430a, 1430b, 1450a, 1450b, 1450c, and 1450d may be similar to a method of splitting the first coding unit 1400. Accordingly, the plurality of coding units 1410a, 1410b, 1430a, 1430b, 1450a, 1450b, 1450c, and 1450d may each be independently split into a plurality of coding units. Referring to FIG. 14, the video decoding apparatus 100 may determine the second coding units 1410a and 1410b by splitting the first coding unit 1400 in the vertical direction, and in addition, may determine to split or not to split each of the second coding units 1410a and 1410b independently.

According to the present embodiment, the video decoding apparatus 100 may split the left second coding unit 1410a in the horizontal direction to obtain third coding units 1420a and 1420b, and may not split the right second coding unit 1410b.

According to the present embodiment, a processing order of coding units may be determined based on a split process of coding units. In other words, a processing order of split coding units may be determined based on a processing order of coding units just before being split. The video decoding apparatus 100 may determine an order of processing the third coding units 1420a and 1420b determined when the left second coding unit 1410a is split independently from the right second coding unit 1410b. Since the third coding units 1420a and 1420b are determined when the left second coding unit 1410a is split in the horizontal direction, the third coding units 1420a and 1420b may be processed in a vertical direction 1420c. Also, since the order of processing the left second coding unit 1410a and the right second coding unit 1410b is in the horizontal direction 1410c, the third coding units 1420a and 1420b included in the left second coding unit 1410a may be processed in the vertical direction 1420c and then the right second coding unit 1410b may be processed. Because the above descriptions are for describing a process of determining a processing order according to coding units before being split, the process should not be limitedly interpreted to the above embodiments, and various methods of independently processing coding units split and determined in various shapes according to a predetermined order may be used.

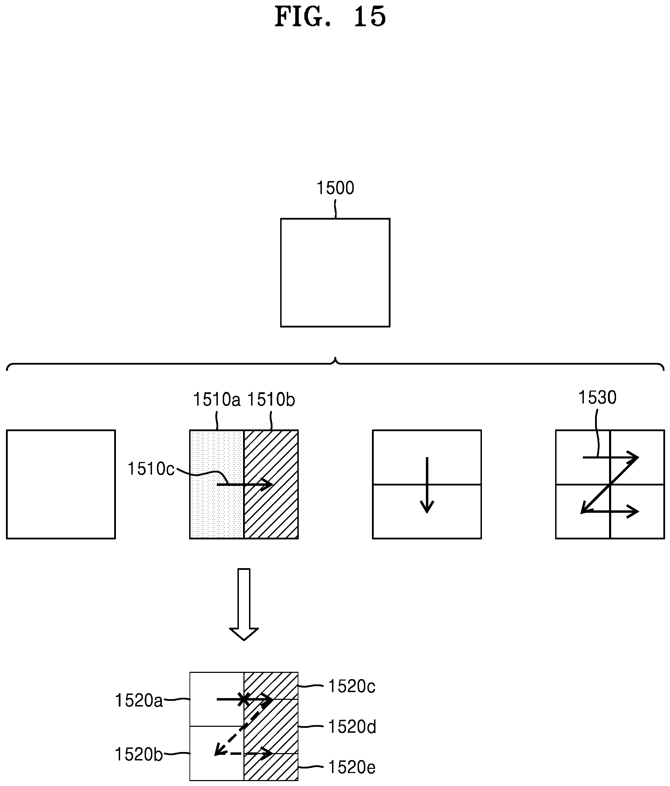

FIG. 15 illustrates a process of determining, by the video decoding apparatus 100, that a current coding unit is split into an odd number of coding units when coding units are unable to be processed in a predetermined order, according to an embodiment.

According to the present embodiment, the video decoding apparatus 100 may determine that the current coding unit is split into the odd number of coding units based on obtained block shape information and split shape information. Referring to FIG. 15, a first coding unit 1500 having a square shape may be split into second coding units 1510a and 1510b having non-square shapes, and the second coding units 1510a and 1510b may be independently split into third coding units 1520a, 1520b, 1520c, 1520d, and 1520e. According to the present embodiment, the video decoding apparatus 100 may determine a plurality of the third coding units 1520a and 1520b by splitting the left coding unit 1510a from among the second coding units in a horizontal direction, and the right coding unit 1510b may be split into an odd number of the third coding units 1520c, 1520d, and 1520e.

According to the present embodiment, the video decoding apparatus 100 may determine whether a coding unit split into an odd number exists by determining whether the third coding units 1520a, 1520b, 1520c, 1520d, and 1520e are processable in a predetermined order. Referring to FIG. 15, the video decoding apparatus 100 may determine the third coding units 1520a, 1520b, 1520c, 1520d, and 1520e by recursively splitting the first coding unit 1500. The video decoding apparatus 100 may determine, based on at least one of block shape information and split shape information, whether there is a coding unit split into an odd number from among the first coding unit 1500, the second coding units 1510a and 1510b, and the third coding units 1520a, 1520b, 1520c, 1520d, and 1520e. For example, a coding unit located at the right from among the second coding units 1510a and 1510b may be split into the odd number of third coding units 1520c, 1520d, and 1520e. An order of processing a plurality of coding units included in the first coding unit 1500 may be a predetermined order 1530 (for example, a z-scan order), and the video decoding apparatus 100 may determine whether the third coding units 1520c, 1520d, and 1520e determined when the right second coding unit 1510b is split into an odd number satisfy a condition of being processable according to the predetermined order.

According to the present embodiment, the video decoding apparatus 100 may determine whether the third coding units 1520a, 1520b, 1520c, 1520d, and 1520e included in the first coding unit 1500 satisfy a condition of being processable according to a predetermined order, wherein the condition is related to whether at least one of a width and a height of the second coding units 1510a and 1510b is split into halves along boundaries of the third coding units 1520a, 1520b, 1520c, 1520d, and 1520e. For example, the third coding units 1520a and 1520b that are determined when the left second coding unit 1510a having a non-square shape is split into halves satisfy the condition, but the third coding units 1520c, 1520d, and 1520e do not satisfy the condition since the boundaries of the third coding units 1520c, 1520d, and 1520e that are determined when the right second coding unit 1510b is split into three coding units are unable to split a width or height of the right second coding unit 1510b into halves. Also, the video decoding apparatus 100 may determine disconnection of a scan order when the condition is dissatisfied, and determine that the right second coding unit 1510b is split into an odd number of coding units based on the determination result. According to the present embodiment, when a coding unit is split into an odd number of coding units, the video decoding apparatus 100 may set a predetermined limitation on a coding unit at a predetermined location from among the coding units, and because details about the limitation or the predetermined location have been described above through various embodiments, detail descriptions thereof are not provided again.

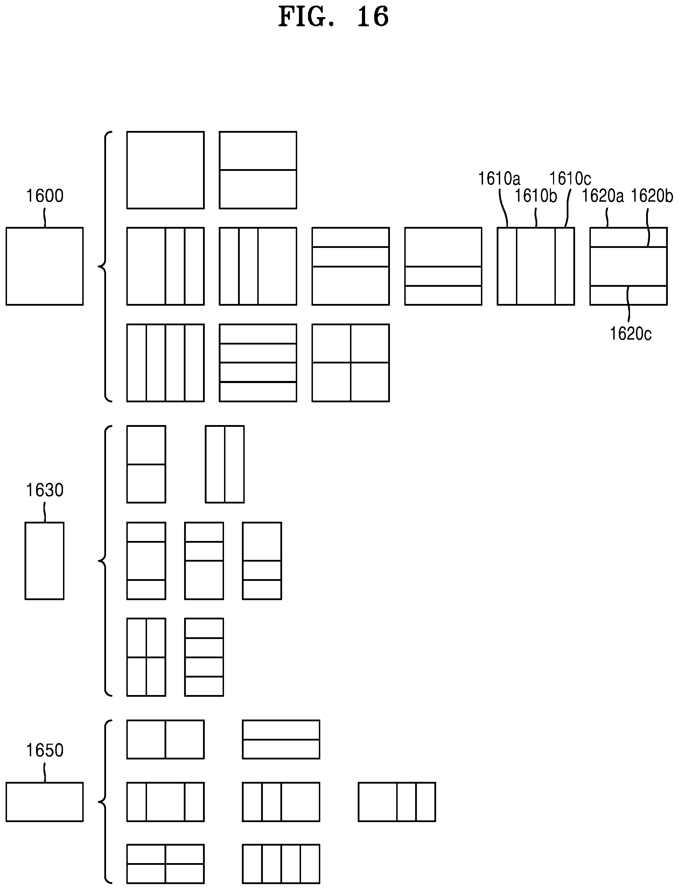

FIG. 16 illustrates a process of determining, by the video decoding apparatus 100, at least one coding unit when a first coding unit 1600 is split, according to an embodiment. According to the present embodiment, the video decoding apparatus 100 may split the first coding unit 1600 based on at least one of block shape information and split shape information obtained through the information obtainer 120. The first coding unit 1600 having a square shape may be split into four coding units having square shapes or non-square shapes. For example, referring to FIG. 16, when block shape information indicates that the first coding unit 1600 is a square and split shape information indicates that the first coding unit 1600 is split into non-square coding units, the video decoding apparatus 100 may split the first coding unit 1600 into a plurality of non-square coding units. In detail, when the split shape information indicates that the first coding unit 1600 is split into a horizontal or vertical direction to determine an odd number of coding units, the video decoding apparatus 100 may split the first coding unit 1600 having a square shape into, as the odd number of coding units, second coding units 1610a, 1610b, and 1610c determined when the first coding unit 1600 is split in the vertical direction, or second coding units 1620a, 1620b, and 1620c determined when the first coding unit 1600 is split in the horizontal direction.

According to the present embodiment, the video decoding apparatus 100 may determine whether the second coding units 1610a, 1610b, and 1610c and 1620a, 1620b, and 1620c included in the first coding unit 1600 satisfy a condition of being processable according to a predetermined order, wherein the condition is related to whether at least one of the width and the height of the first coding unit 1600 is split into halves along the boundaries of the second coding units 1610a, 1610b, and 1610c and 1620a, 1620b, and 1620c. Referring to FIG. 16, since the boundaries of the second coding units 1610a, 1610b, and 1610c determined when the first coding unit 1600 having a square shape is split in the vertical direction are unable to split the width of the first coding unit 1600 into halves, it may be determined that the first coding unit 1600 does not satisfy the condition of being processable according to the predetermined order. Also, since the boundaries of the second coding units 1620a, 1620b, and 1620c determined when the first coding unit 1600 having a square shape is split in the horizontal direction are unable to split the width of the first coding unit 1600 into halves, it may be determined that the first coding unit 1600 does not satisfy the condition of being processable according to the predetermined order. When the condition is dissatisfied, the video decoding apparatus 100 determines disconnection of a scan order and may determine that the first coding unit 1600 is split into an odd number of coding units based on the determination result. According to the present embodiment, when a coding unit is split into an odd number of coding units, the video decoding apparatus 100 may set a predetermined limitation on a coding unit at a predetermined location from among the coding units, and since details about the limitation or the predetermined location have been described above through various embodiments, detail descriptions thereof are not provided again.

According to the present embodiment, the video decoding apparatus 100 may determine coding units having various shapes by splitting a first coding unit.

Referring to FIG. 16, the video decoding apparatus 100 may split the first coding unit 1600 having a square shape and a first coding unit 1630 or 1650 having a non-square shape into coding units having various shapes.

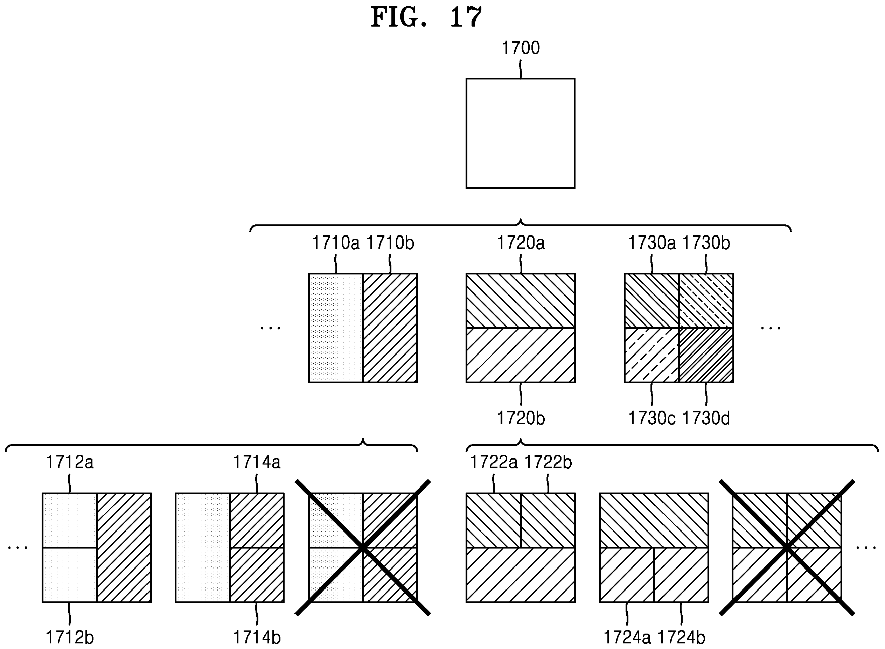

FIG. 17 illustrates that a shape of a second coding unit that is splittable is limited by the video decoding apparatus 100 when the second coding unit having a non-square shape, which is determined when a first coding unit 1700 is split, satisfies a predetermined condition, according to an embodiment.

According to the present embodiment, the video decoding apparatus 100 may determine, based on at least one of block shape information and split shape information obtained through the information obtainer 120, to split the first coding unit 1700 having a square shape into second coding units 1710a, 1710b, 1720a, and 1720b having non-square shapes. The second coding units 1710a, 1710b, 1720a, and 1720b may be independently split. Accordingly, the video decoding apparatus 100 may determine to split or not to split the second coding units 1710a, 1710b, 1720a, and 1720b based on at least one of block shape information and split shape information related to each of the second coding units 1710a, 1710b, 1720a, and 1720b. According to the present embodiment, the video decoding apparatus 100 may determine third coding units 1712a and 1712b by splitting the left second coding unit 1710a having a non-square shape and determined when the first coding unit 1700 is split in a vertical direction. However, when the left second coding unit 1710a is split in a horizontal direction, the video decoding apparatus 100 may limit the right second coding unit 1710b not to be split in the horizontal direction like a direction in which the left second coding unit 1710a is split. When the right second coding unit 1710b is split in the same direction and third coding units 1714a and 1714b are determined, the third coding units 1712a, 1712b, 1714a, and 1714b may be determined when the left second coding unit 1710a and the right second coding unit 1710b are independently split in the horizontal direction. However, this is the same result as the video decoding apparatus 100 splitting the first coding unit 1700 into four second coding units 1730a, 1730b, 1730c, and 1730d having square shapes based on at least one of block shape information and split shape information, and thus may be inefficient in terms of image decoding.

According to the present embodiment, the video decoding apparatus 100 may determine third coding units 1722a, 1722b, 1724a, and 1724b by splitting the second coding units 1720a or 1720b having a non-square shape and determined when the first coding unit 1700 is split in the horizontal direction. However, when one of second coding units (for example, the top second coding unit 1720a) is split in the vertical direction, the video decoding apparatus 100 may limit the other second coding unit (for example, the bottom second coding unit 1720b) not to be split in the vertical direction like a direction in which the top second coding unit 1720a is split based on the above reasons.

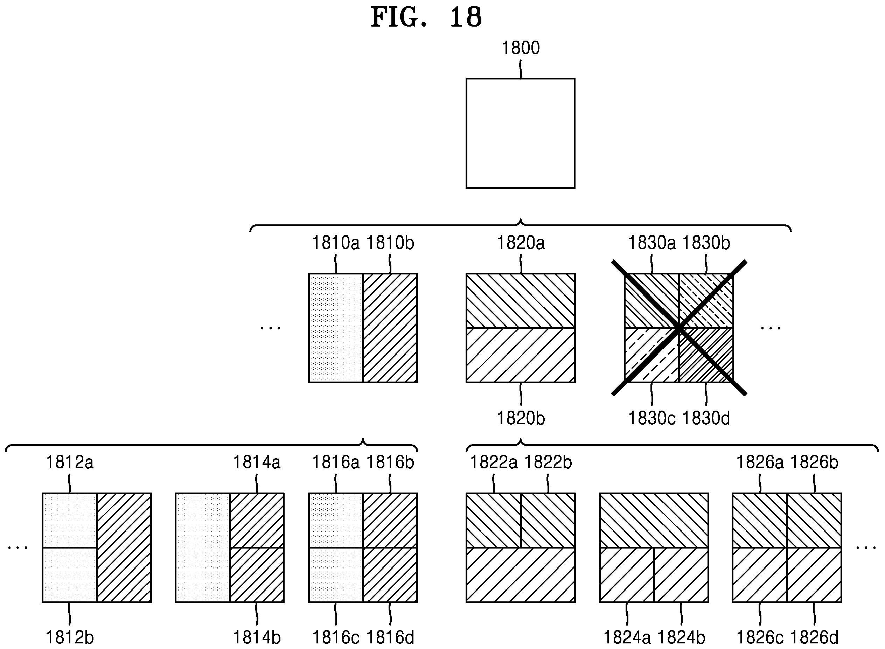

FIG. 18 illustrates a process of splitting, by the video decoding apparatus 100, a coding unit having a square shape when split shape information does not indicate splitting of the coding unit into four coding units having square shapes, according to an embodiment.

According to the present embodiment, the video decoding apparatus 100 may determine second coding units 1810a, 1810b, 1820a, 1820b, and the like by splitting a first coding unit 1800 based on at least one of block shape information and split shape information. The split shape information may include information about various shapes into which a coding unit is splittable, but sometimes, the information about various shapes may not include information for splitting a coding unit into four square coding units. According to such split shape information, the video decoding apparatus 100 is unable to split the first coding unit 1800 having a square shape into four square second coding units 1830a, 1830b, 1830c, and 1830d. Based on the split shape information, the video decoding apparatus 100 may determine the second coding units 1810a, 1810b, 1820a, 1820b, and the like having non-square shapes.

According to the present embodiment, the video decoding apparatus 100 may independently split the second coding units 1810a, 1810b, 1820a, 1820b, and the like having non-square shapes. Each of the second coding units 1810a, 1810b, 1820a, 1820b, and the like may be split in a predetermined order through a recursive method that may correspond to a method of splitting the first coding unit 1800 based on at least one of block shape information and split shape information.

For example, the video decoding apparatus 100 may determine third coding units 1812a and 1812b having square shapes by splitting the left second coding unit 1810a in a horizontal direction and may determine third coding units 1814a and 1814b having square shapes by splitting the right second coding unit 1810b in a horizontal direction. In addition, the video decoding apparatus 100 may determine third coding units 1816a, 1816b, 1816c, and 1816d having square shapes by splitting both the left second coding unit 1810a and the right second coding unit 1810b in the horizontal direction. In this case, coding units may be determined in the same manner in which the first coding unit 1800 is split into the four square-shape second coding units 1830a, 1830b, 1830c, and 1830d.

As another example, the video decoding apparatus 100 may determine third coding units 1822a and 1822b having square shapes by splitting the top second coding unit 1820a in the vertical direction and determine third coding units 1824a and 1824b having square shapes by splitting the bottom second coding unit 1820b in the vertical direction. In addition, the video decoding apparatus 100 may determine third coding units 1822a, 1822b, 1824a, and 1824b having square shapes by splitting both the top second coding unit 1820a and the bottom second coding unit 1820b in the vertical direction. In this case, coding units may be determined in the same manner in which the first coding unit 1800 is split into the four square-shape second coding units 1830a, 1830b, 1830c, and 1830d.

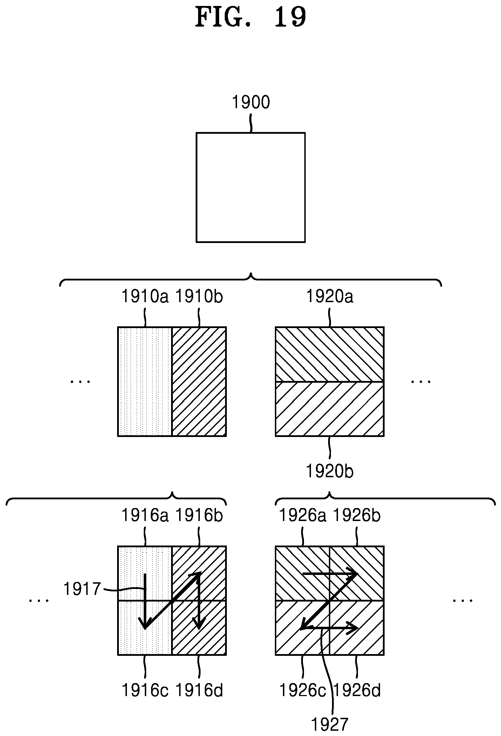

FIG. 19 illustrates that a processing order between a plurality of coding units may be changed according to a split process of a coding unit, according to an embodiment.

According to the present embodiment, the video decoding apparatus 100 may split a first coding unit 1900, based on block shape information and split shape information. When the block shape information indicates a square shape and the split shape information indicates that the first coding unit 1900 is split in at least one of a horizontal direction and a vertical direction, the video decoding apparatus 100 may split the first coding unit 1900 to determine second coding units (for example, second coding units 1910a, 1910b, 1920a, 1920b, 1930a, 1930b, 1930c, 1930d, and the like). Referring to FIG. 19, the second coding units 1910a, 1910b, 1920a, and 1920b having non-square shapes and determined when the first coding unit 1900 is split only in the horizontal or vertical direction may each be independently split based on block shape information and split shape information about each of the second coding units 1910a, 1910b, 1920a, and 1920b. For example, the video decoding apparatus 100 may determine third coding units 1916a, 1916b, 1916c, and 1916d by splitting the second coding units 1910a and 1910b in the horizontal direction, wherein the second coding units 1910a and 1910b are generated when the first coding unit 1900 is split in the vertical direction, and may determine third coding units 1926a, 1926b, 1926c, and 1926d by splitting the second coding units 1920a and 1920b in the horizontal direction, wherein the second coding units 1920a and 1920b are generated when the first coding unit 1900 is split in the horizontal direction. Because split processes of the second coding units 1910a, 1910b, 1920a, and 1920b have been described with reference to FIG. 17, detail descriptions thereof are not provided again.

According to the present embodiment, the video decoding apparatus 100 may process coding units according to a predetermined order. Since characteristics about processing of coding units according to a predetermined order have been described above with reference to FIG. 14, detail descriptions thereof are not provided again. Referring to FIG. 19, the video decoding apparatus 100 may determine four square-shape third coding units 1916a, 1916b, 1916c, and 1916d or 1926a, 1926b, 1926c, and 1926d by splitting the first coding unit 1900 having a square shape. According to the present embodiment, the video decoding apparatus 100 may determine a processing order of the third coding units 1916a, 1916b, 1916c, and 1916d or 1926a, 1926b, 1926c, and 1926d according to a shape of the first coding unit 1900 being split.

According to the present embodiment, the video decoding apparatus 100 may determine the third coding units 1916a, 1916b, 1916c, and 1916d by splitting each of the second coding units 1910a and 1910b in the horizontal direction, wherein the second coding units 1910a and 1910b are generated when the first coding unit 1900 is split in the vertical direction, and the video decoding apparatus 100 may process the third coding units 1916a, 1916b, 1916c, and 1916d according to an order 1917 of first processing the third coding units 1916a and 1916b included in the left second coding unit 1910a in the vertical direction and then processing the third coding units 1916c and 1916d included in the right second coding unit 1910b in the vertical direction.

According to the present embodiment, the video decoding apparatus 100 may determine the second coding units 1926a, 1926b, 1926c, and 1926d by splitting each of the second coding units 1920a and 1920b in the vertical direction, wherein the second coding units1920a and 1920b are generated when the first coding unit 1900 is split in the horizontal direction, and the video decoding apparatus 100 may process the third coding units 1926a, 1926b, 1926c, and 1926d according to an order of first processing the third coding units 1926a and 1926b included in the top second coding unit 1920a in the horizontal direction and then processing the third coding units 1926c and 1926d included in the bottom second coding unit 1920b in the horizontal direction.

Referring to FIG. 19, the third coding units 1916a, 1916b, 1916c, 1916d, 1926a, 1926b, 1926c, and 1926d having square shapes may be determined when each of the second coding units 1910a, 1910b, 1920a, and 1920b are split. The second coding units 1910a and 1910b determined when the first coding unit 1900 is split in the vertical direction and the second coding units 1920a and 1920b determined when the first coding unit 1900 is split in the horizontal direction have different shapes, but according to the third coding units 1916a, 1916b, 1916c, 1916d, 1926a, 1926b, 1926c, and 1926d determined thereafter, the first coding unit 1900 is split into coding units having the same shapes. Accordingly, even when coding units having the same shapes are determined as a result by recursively splitting coding units through different processes based on at least one of block shape information and split shape information, the video decoding apparatus 100 may process the coding units having the same shapes in different orders.

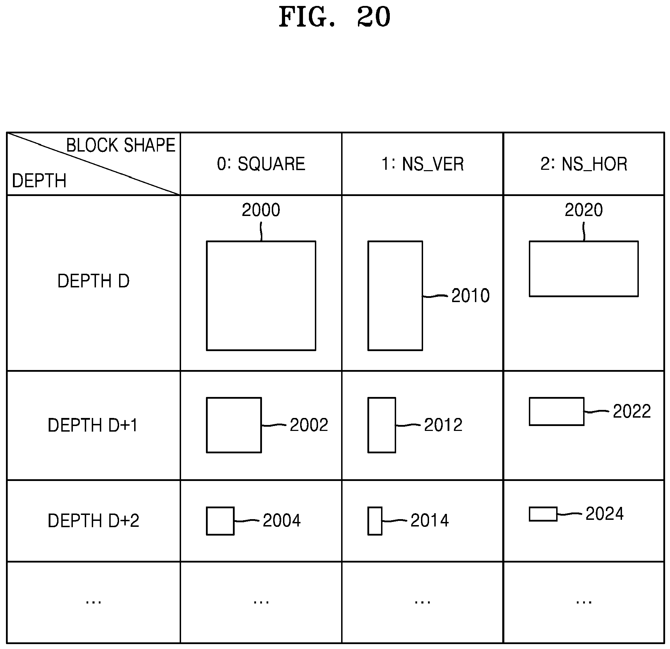

FIG. 20 illustrates a process of determining a depth of a coding unit when a shape and size of the coding unit changes, when a plurality of coding units are determined when the coding unit is recursively split, according to an embodiment.

According to the present embodiment, the video decoding apparatus 100 may determine a depth of a coding unit according to a predetermined criterion. For example, the predetermined criterion may be a length of a longer side of the coding unit. When a length of a longer side of a coding unit before being split is 2n times a length of a longer side of a current coding unit, wherein n>0, the video decoding apparatus 100 may determine that a depth of the current coding unit is higher than a depth of the coding unit before being split by n. Hereinafter, a coding unit having a higher depth will be referred to as a coding unit of a lower depth.

Referring to FIG. 20, according to the present embodiment, the video decoding apparatus 100 may determine a second coding unit 2002 and a third coding unit 2004 of lower depths by splitting a first coding unit 2000 having a square shape, based on block shape information indicating a square shape (for example, block shape information may indicate '0: SQUARE'). When a size of the first coding unit 2000 having a square shape is 2Nx2N, the second coding unit 2002 determined by splitting a width and a height of the first coding unit 2000 by 1/2 may have a size of NxN. In addition, the third coding unit 2004 determined by splitting a width and a height of the second coding unit 2002 by 1/2 may have a size of N/2xN/2. In this case, a width and a height of the third coding unit 2004 correspond to 1/2 times those of the first coding unit 2000. When a depth of the first coding unit 2000 is D, a depth of the second coding unit 2002, which is 1/2 times the width and height of the first coding unit 2000, may be D+1, and a depth of the third coding unit 2004, which is 1/2 times the width and height of the first coding unit 2000, may be D+2.

According to the present embodiment, the video decoding apparatus 100 may determine a second coding unit 2012 or 2022 and a third coding unit 2014 or 2024 of lower depths by splitting a first coding unit 2010 or 2020 having a non-square shape, based on block shape information indicating a non-square shape (for example, the block shape information may indicate '1: NS_VER' indicating that a height is longer than a width or indicate '2: NS_HOR' indicating that a width is longer than a height).

The video decoding apparatus 100 may determine second coding units (for example, the second coding units 2002, 2012, 2022, and the like) by splitting at least one of the width and the height of the first coding unit 2010 having a size of Nx2N. In other words, the video decoding apparatus 100 may determine the second coding unit 2002 having a size of NxN or the second coding unit 2022 having a size of NxN/2 by splitting the first coding unit 2010 in a horizontal direction, or may determine the second coding unit 2012 having a size of N/2xN by splitting the first coding unit 2010 in horizontal and vertical directions.

According to the present embodiment, the video decoding apparatus 100 may determine the second coding units (for example, the second coding units 2002, 2012, 2022, and the like) by splitting at least one of the width and the height of the first coding unit 2020 having a size of 2NxN. That is, the video decoding apparatus 100 may determine the second coding unit 2002 having a size of NxN or the second coding unit 2012 having a size of N/2xN by splitting the first coding unit 2020 in the vertical direction, or may determine the second coding unit 2022 having a size of NxN/2 by splitting the first coding unit 2020 in the horizontal and vertical directions.

According to the present embodiment, the video decoding apparatus 100 may determine third coding units (for example, the third coding units 2004, 2014, 2024, and the like) by splitting at least one of a width and a height of the second coding unit 2002 having a size of NxN. That is, the video decoding apparatus 100 may determine the third coding unit 2004 having a size of N/2xN/2, the third coding unit 2014 having a size of N/2xN/2, or the third coding unit 2024 having a size of N/2xN/2 by splitting the second coding unit 2002 in vertical and horizontal directions.

According to the present embodiment, the video decoding apparatus 100 may determine the third coding units (for example, the third coding units 2004, 2014, 2024, and the like) by splitting at least one of a width and a height of the second coding unit 2012 having a size of N/2xN. That is, the video decoding apparatus 100 may determine the third coding unit 2004 having a size of N/2xN/2 or the third coding unit 2024 having a size of N/2xN/2 by splitting the second coding unit 2012 in a horizontal direction, or determine the third coding unit 2014 having a size of N/2xN/2 by splitting the second coding unit 2012 in vertical and horizontal directions.

According to the present embodiment, the video decoding apparatus 100 may determine the third coding units (for example, the third coding units 2004, 2014, 2024, and the like) by splitting at least one of a width and a height of the second coding unit 2014 having a size of NxN/2. That is, the video decoding apparatus 100 may determine the third coding unit 2004 having a size of N/2xN/2 or the third coding unit 2014 having a size of N/2xN/2 by splitting the second coding unit 2012 in a vertical direction, or determine the third coding unit 2024 having a size of N/2xN/2 by splitting the second coding unit 2012 in vertical and horizontal directions.

According to the present embodiment, the video decoding apparatus 100 may split coding units having square shapes (for example, the first coding units 2000, 2002, and 2004) in a horizontal or vertical direction. For example, the first coding unit 2000 having a size of 2Nx2N may be split in the vertical direction to determine the first coding unit 2010 having a size of Nx2N or in the horizontal direction to determine the first coding unit 2020 having a size of 2NxN/. According to the present embodiment, when a depth is determined based on a length of a longest side of a coding unit, a depth of a coding unit determined when the first coding unit 2000, 2002, or 2004 is split in the horizontal or vertical direction may be the same as a depth of the first coding unit 2000, 2002, or 2004.

According to the present embodiment, the width and height of the third coding unit 2014 or 2024 may be 1/2 times the first coding unit 2010 or 2020. When the depth of the first coding unit 2010 or 2020 is D, the depth of the second coding unit 2012 or 2014, which is 1/2 times the width and height of the first coding unit 2010 or 2020, may be D+1, and the depth of the third coding unit 2014 or 2024, which is 1/2 times the width and height of the first coding unit 2010 or 2020, may be D+2.

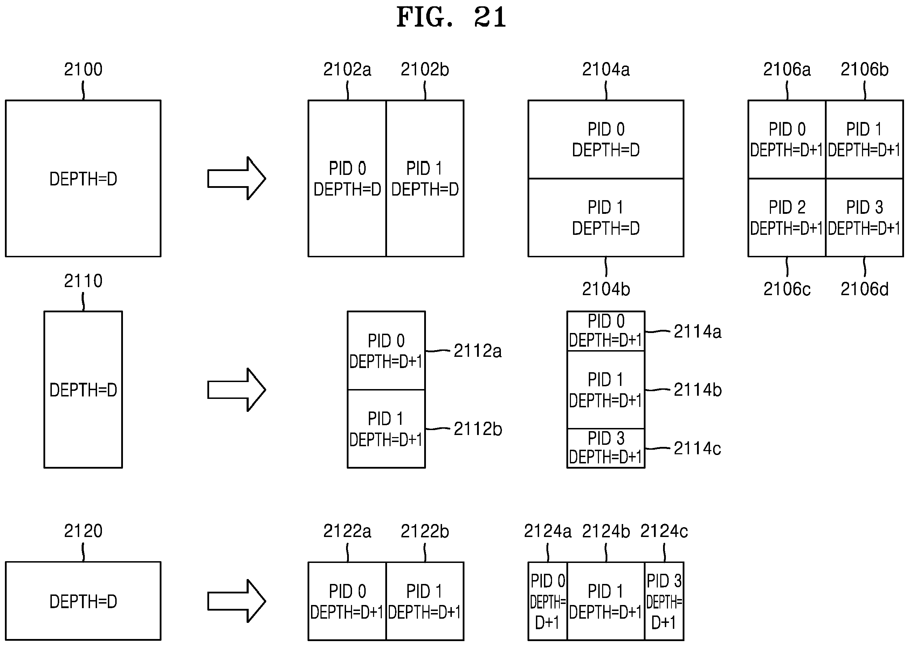

FIG. 21 illustrates a depth determinable according to shapes and sizes of coding units, and a part index (PID) for distinguishing between the coding units, according to an embodiment.

According to the present embodiment, the video decoding apparatus 100 may determine second coding units having various shapes by splitting a first coding unit 2100 having a square shape. Referring to FIG. 21, the video decoding apparatus 100 may determine second coding units 2102a, 2102b, 2104a, 2104b, 2106a, 2106b, 2106c, and 2106d by splitting the first coding unit 2100 in at least one of a vertical direction and a horizontal direction, according to split shape information. That is, the video decoding apparatus 100 may determine the second coding units 2102a, 2102b, 2104a, 2104b, 2106a, 2106b, 2106c, and 2106d based on split shape information about the first coding unit 2100.

According to the present embodiment, depths of the second coding units 2102a, 2102b, 2104a, 2104b, 2106a, 2106b, 2106c, and 2106d determined according to the split shape information about the first coding unit 2100 having a square shape may be determined based on lengths of longer sides. For example, since lengths of longer sides of the second coding units 2102a, 2102b, 2104a, and 2104b having non-square shapes are the same as a length of one side of the first coding unit 2100 having a square shape, depths of the first coding unit 2100 and the second coding units 2102a, 2102b, 2104a, and 2104b having non-square shapes may be D, i.e., the same. On the other hand, when the video decoding apparatus 100 splits the first coding unit 2100 into the four second coding units 2106a, 2106b, 2106c, and 2106d having square shapes based on split shape information, since a length of one side of each of the second coding units 2106a, 2106b, 2106c, and 2106d having square shapes is 1/2 of a length of one side of the first coding unit 2100, depths of the second coding units 2106a, 2106b, 2106c, and 2106d may be D+1, i.e., one depth lower than the depth D of the first coding unit 2100.

According to the present embodiment, the video decoding apparatus 100 may split a first coding unit 2110 having a height longer than a width into a plurality of second coding units 2112a, 2112b, 2114a, 2114b, and 2114c by splitting the first coding unit 2110 in a horizontal direction according to split shape information. According to the present embodiment, the video decoding apparatus 100 may split a first coding unit 2120 having a width longer than a height into a plurality of second coding units 2122a and 2122b, or 2124a, 2124b, and 2124c by splitting the first coding unit 2120 in a vertical direction according to split shape information.

According to the present embodiment, depths of the second coding units 2112a, 2112b, 2114a, 2114b, 2116a, 2116b, 2116c, and 2116d determined according to the split shape information about the first coding unit 2110 or 2120 having a non-square shape may be determined based on lengths of longer sides. For example, since a length of one side of each of the second coding units 2112a and 2112b having square shapes is 1/2 of a length of one side of the first coding unit 2110 having a non-square shape in which a height is longer than a width, the depths of the second coding units 2102a, 2102b, 2104a, and 2104b having square shapes are D+1, i.e., one depth lower than the depth D of the first coding unit 2110 having a non-square shape.

In addition, the video decoding apparatus 100 may split the first coding unit 2110 having a non-square shape into an odd number of the second coding units 2114a, 2114b, and 2114c based on split shape information. The odd number of second coding units 2114a, 2114b, and 2114c may include the second coding units 2114a and 2114c having non-square shapes and the second coding unit 2114b having a square shape. Here, since lengths of longer sides of the second coding units 2114a and 2114c having non-square shapes and a length of one side of the second coding unit 2114b having a square shape are 1/2 of a length of one side of the first coding unit 2110, depths of the second coding units 2114a, 2114b, and 2114c may be D+1, i.e., one depth lower than the depth D of the first coding unit 2110. The video decoding apparatus 100 may determine depths of coding units related to the first coding unit 2110 having a non-square shape in which a width is longer than a height in the similar manner as depths of coding units related to the first coding unit 2110 are determined.

According to the present embodiment, while determining PIDs for distinguishing between coding units, the video decoding apparatus 100 may determine the PIDs based on size ratios between the coding units when an odd number of the coding units do not have the same size. Referring to FIG. 21, the coding unit 2114b located at the center of the odd number of coding units 2114a, 2114b, and 2114c has the same width as the coding units 2114a and 2114c, but has a height twice higher than heights of the coding units 2114a and 2114c. In this case, the coding unit 2114b located at the center may include two of each of the coding units 2114a and 2114c. Accordingly, when a PID of the coding unit 2114b located at the center according to a scan order is 1, a PID of the coding unit 2114c located in a next order may be increased by 2, i.e., 3. That is, values of PIDs may be discontinuous. According to the present embodiment, the video decoding apparatus 100 may determine whether an odd number of coding units have the same size based on discontinuity of PIDs for distinguishing between the coding units.

According to the present embodiment, the video decoding apparatus 100 may determine whether a plurality of coding units determined when a current coding unit is split have certain split shapes based on values of PIDs for distinguishing between the coding units. Referring to FIG. 21, the video decoding apparatus 100 may determine an even number of the coding units 2112a and 2112b or an odd number of the coding units 2114a, 2114b, and 2114c by splitting the first coding unit 2110 having a rectangular shape in which a height is longer than a width. The video decoding apparatus 100 may use an ID indicating each coding unit in order to distinguish between a plurality of coding units. According to the present embodiment, the PID may be obtained from a sample at a predetermined location (for example, an upper left sample) of each coding unit.

According to the present embodiment, the video decoding apparatus 100 may determine a coding unit at a predetermined location from among coding units determined via split, by using PIDs for distinguishing between the coding units. According to an embodiment, when split shape information about the first coding unit 2110 having a rectangular shape in which a height is longer than a width indicates split into three coding units, the video decoding apparatus 100 may split the first coding unit 2110 into the three coding units 2114a, 2114b, and 2114c. The video decoding apparatus 100 may allocate a PID to each of the three coding units 2114a, 2114b, and 2114c. The video decoding apparatus 100 may compare PIDs of coding units in order to determine a center coding unit from among an odd number of coding units. The video decoding apparatus 100 may determine the coding unit 2114b having a PID corresponding to a center value from among PIDs as a coding unit located at the center from among coding units determined when the first coding unit 2110 is split, based on PIDs of the coding units. According to the present embodiment, the video decoding apparatus 100 may determine PIDs based on size ratios between coding units when the coding units do not have the same size, while determining the PIDs for distinguishing between the coding units. Referring to FIG. 21, the coding unit 2114b generated when the first coding unit 2110 is split may have the same width as the coding units 2114a and 2114c, but may have a height twice higher than heights of the coding units 2114a and 2114c. In this case, when the PID of the coding unit 2114b located at the center is 1, the PID of the coding unit 2114c located in a next order may be increased by 2, i.e., 3. As such, when an increase range changes while PIDs are uniformly increasing, the video decoding apparatus 100 may determine that a coding unit is split into a plurality of coding units including a coding unit having a different size from other coding units. According to the present embodiment, when split shape information indicates split into an odd number of coding units, the video decoding apparatus 100 may split a current coding unit into an odd number of coding units in which a coding unit at a predetermined location (for example, a center coding unit) has a different size from other coding units. In this case, the video decoding apparatus 100 may determine the center coding unit having the different size by using PIDs of the coding units. However, since the PID, and a size or location of a coding unit at a predetermined location are specified to describe the present embodiment, and thus the present disclosure is not limited thereto, and various PIDs, and various locations and sizes of a coding unit may be used.

According to the present embodiment, the video decoding apparatus 100 may use a predetermined data unit from which a coding unit starts to be recursively split.

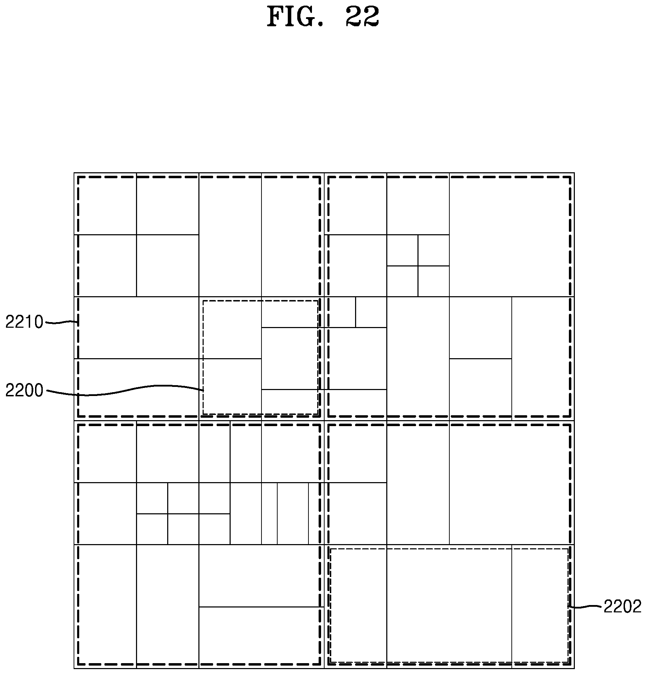

FIG. 22 illustrates that a plurality of coding units are determined according to a plurality of predetermined data units included in a picture, according to an embodiment.

According to the present embodiment, a predetermined data unit may be defined as a data unit from which a coding unit starts to be recursively split by using at least one of block shape information and split shape information. That is, the predetermined data unit may correspond to a coding unit of an uppermost depth used while determining a plurality of coding units splitting a current picture. Hereinafter, for convenience of description, such a predetermined data unit is referred to as a reference data unit.

According to the present embodiment, a reference data unit may indicate a predetermined size and shape. According to an embodiment, a reference coding unit may include MxN samples. Here, M and N may be equal to each other, and may be an integer expressed as a multiple of 2. That is, a reference data unit may indicate a square shape or a non-square shape, and may later be split into an integer number of coding units.

According to the present embodiment, the video decoding apparatus 100 may split a current picture into a plurality of reference data units. According to the present embodiment, the video decoding apparatus 100 may split the plurality of reference data units obtained by splitting the current picture by using split information about each of the reference data units. Split processes of such reference data units may correspond to split processes using a quad-tree structure.

According to the present embodiment, the video decoding apparatus 100 may pre-determine a smallest size available for the reference data unit included in the current picture. Accordingly, the video decoding apparatus 100 may determine the reference data unit having various sizes that are equal to or larger than the smallest size, and determine at least one coding unit based on the determined reference data unit by using block shape information and split shape information.

Referring to FIG. 22, the video decoding apparatus 100 may use a reference coding unit 2200 having a square shape, or may use a reference coding unit 2202 having a non-square shape. According to the present embodiment, a shape and size of a reference coding unit may be determined according to various data units (for example, a sequence, a picture, a slice, a slice segment, and a largest coding unit) that may include at least one reference coding unit.

According to the present embodiment, the information obtainer 120 of the video decoding apparatus 100 may obtain, from a bitstream, at least one of information about a shape of a reference coding unit and information about a size of the reference coding unit, according to the various data units. Processes of determining at least one coding unit included in the reference coding unit 2200 having a square shape have been described above through processes of splitting the current coding unit 1000 of FIG. 10, and processes of determining at least one coding unit included in the reference coding unit 2202 having a non-square shape have been described above through processes of splitting the current coding unit 1100 or 1150 of FIG. 11, and thus descriptions thereof are not provided here.

According to the present embodiment, in order to determine a size and shape of a reference coding unit according to some data units pre-determined based on a predetermined condition, the video decoding apparatus 100 may use a PID for checking the size and shape of the reference coding unit. That is, the information obtainer 120 may obtain, from a bitstream, only a PID for checking a size and shape of a reference coding unit as a data unit satisfying a predetermined condition (for example, a data unit having a size equal to or smaller than a slice) from among various data units (for example, a sequence, a picture, a slice, a slice segment, and a largest coding unit), according to slices, slice segments, and largest coding units. The video decoding apparatus 100 may determine the size and shape of the reference data unit according to data units that satisfy the predetermined condition, by using the PID. When information about a shape of a reference coding unit and information about a size of a reference coding unit are obtained from a bitstream and used according to data units having relatively small sizes, usage efficiency of the bitstream may not be sufficient, and thus instead of directly obtaining the information about the shape of the reference coding unit and the information about the size of the reference coding unit, only a PID may be obtained and used. In this case, at least one of the size and the shape of the reference coding unit corresponding to the PID indicating the size and shape of the reference coding unit may be pre-determined. That is, the video decoding apparatus 100 may select at least one of the pre-determined size and shape of the reference coding unit according to the PID so as to determine at least one of the size and shape of the reference coding unit included in a data unit that is a criterion for obtaining the PID.

According to the present embodiment, the video decoding apparatus 100 may use at least one reference coding unit included in one largest coding unit. That is, a largest coding unit splitting an image may include at least one reference coding unit, and a coding unit may be determined when each of the reference coding unit is recursively split. According to the present embodiment, at least one of a width and height of the largest coding unit may be an integer times at least one of a width and height of the reference coding unit. According to the present embodiment, a size of a reference coding unit may be equal to a size of a largest coding unit, which is split n times according to a quad-tree structure. That is, the video decoding apparatus 100 may determine a reference coding unit by splitting a largest coding unit n times according to a quad-tree structure, and split the reference coding unit based on at least one of block shape information and split shape information according to various embodiments.

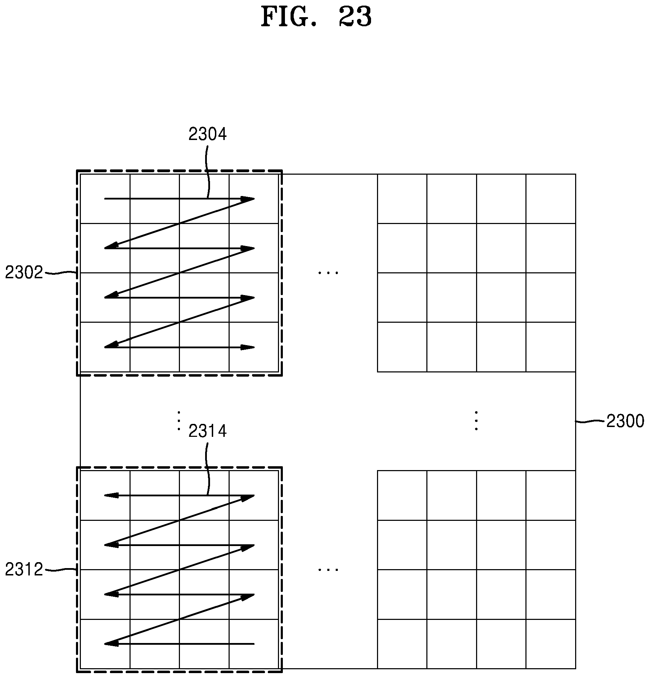

FIG. 23 illustrates a processing block that is a criterion in determining a determining order of a reference coding unit included in a picture 2300, according to an embodiment.

According to the present embodiment, the video decoding apparatus 100 may determine at least one processing block splitting a picture. A processing block is a data unit including at least one reference coding unit splitting an image, and the at least one reference coding unit included in the processing block may be determined in a certain order. That is, a determining order of the at least one reference coding unit determined in each processing block may correspond to one of various orders for determining a reference coding unit, and may vary according to processing blocks. A determining order of a reference coding unit determined per processing block may be one of various orders, such as a raster scan order, a Z-scan order, an N-scan order, an up-right diagonal scan order, a horizontal scan order, and a vertical scan order, but should not be limitedly interpreted by the scan orders.

According to the present embodiment, the video decoding apparatus 100 may determine a size of at least one processing block included in an image by obtaining information about a size of a processing block. The video decoding apparatus 100 may obtain, from a bitstream, the information about a size of a processing block to determine the size of the at least one processing block included in the image. The size of the processing block may be a predetermined size of a data unit indicated by the information about a size of a processing block.

According to the present embodiment, the information obtainer 120 of the video decoding apparatus 100 may obtain, from the bitstream, the information about a size of a processing block according to certain data units. For example, the information about a size of a processing block may be obtained from the bitstream in data units of images, sequences, pictures, slices, and slice segments. That is, the information obtainer 120 may obtain, from the bitstream, the information about a size of a processing block according to such several data units, and the video decoding apparatus 100 may determine the size of at least one processing block splitting the picture by using the obtained information about a size of a processing block, wherein the size of the processing block may be an integer times a size of a reference coding unit.

According to the present embodiment, the video decoding apparatus 100 may determine sizes of processing blocks 2302 and 2312 included in the picture 2300. For example, the video decoding apparatus 100 may determine a size of a processing block based on information about a size of a processing block, the information obtained from a bitstream. Referring to FIG. 23, the video decoding apparatus 100 may determine horizontal sizes of the processing blocks 2302 and 2312 to be four times a horizontal size of a reference coding unit, and a vertical size thereof to be four times a vertical size of the reference coding unit, according to an embodiment. The video decoding apparatus 100 may determine a determining order of at least one reference coding unit in at least one processing block.

According to the present embodiment, the video decoding apparatus 100 may determine each of the processing blocks 2302 and 2312 included in the picture 2300 based on a size of a processing block, and may determine a determining order of at least one reference coding unit included in each of the processing blocks 2302 and 2312. According to the present embodiment, determining of a reference coding unit may include determining of a size of the reference coding unit.

According to the present embodiment, the video decoding apparatus 100 may obtain, from a bitstream, information about a determining order of at least one reference coding unit included in at least one processing block, and may determine the determining order of the at least one reference coding unit based on the obtained information. The information about a determining order may be defined as an order or direction of determining reference coding units in a processing block. That is, an order of determining reference coding units may be independently determined per processing block.

According to the present embodiment, the video decoding apparatus 100 may obtain, from a bitstream, information about a determining order of a reference coding unit according to certain data units. For example, the information obtainer 120 may obtain, from the bitstream, the information about a determining order of a reference coding unit according to data units, such as images, sequences, pictures, slices, slice segments, and processing blocks. Since the information about a determining order of a reference coding unit indicates a determining order of a reference coding unit in a processing block, the information about a determining order may be obtained per certain data unit including an integer number of processing blocks.

According to the present embodiment, the video decoding apparatus 100 may determine at least one reference coding unit based on the determined order.

According to the present embodiment, the information obtainer 120 may obtain, from the bitstream, information about a determining order of a reference coding unit, as information related to the processing blocks 2302 and 2312, and the video decoding apparatus 100 may determine an order of determining at least one reference coding unit included in the processing blocks 2302 and 2312 and determine at least one reference coding unit included in the picture 2300 according to a determining order of a coding unit. Referring to FIG. 23, the video decoding apparatus 100 may determine determining orders 2304 and 2314 of at least one reference coding unit respectively related to the processing blocks 2302 and 2312. For example, when information about a determining order of a reference coding unit is obtained per processing block, determining orders of a reference coding unit related to the processing blocks 2302 and 2312 may be different from each other. When the determining order 2304 related to the processing block 2302 is a raster scan order, reference coding units included in the processing block 2302 may be determined according to the raster scan order. On the other hand, when the determining order 2314 related to the processing block 2312 is an inverse order of a changed raster scan order, reference coding units included in the processing block 2312 may be determined in the inverse order of the changed raster scan order.

The video decoding apparatus 100 may decode at least one determined reference coding unit. The video decoding apparatus 100 may decode an image, based on a reference coding unit determined through the aforementioned embodiments. A method of decoding the reference coding unit may include various methods of decoding an image.

According to the present embodiment, the video decoding apparatus 100 may obtain, from a bitstream, and use block shape information indicating a shape of a current coding unit or split shape information indicating a method of splitting the current coding unit. The block shape information or the split shape information may be included in the bitstream related to various data units. For example, the video decoding apparatus 100 may use the block shape information or the split shape information included in a sequence parameter set, a picture parameter set, a video parameter set, a slice header, or a slice segment header. In addition, the video decoding apparatus 100 may obtain, from the bitstream, and use a syntax according to each largest coding unit, a reference coding unit, or a processing block, the syntax corresponding to the block shape information or the split shape information.

While this disclosure has been particularly shown and described with reference to various embodiments thereof, it will be understood by those of ordinary skill in the art that various changes in form and details may be made therein without departing from the spirit and scope of the disclosure. The embodiments should be considered in a descriptive sense only and not for purposes of limitation. The scope of the disclosure is defined not by the detailed description of the disclosure but by the appended claims, and all differences within the scope will be construed as being included in the present disclosure.

The embodiments of the present disclosure can be written as computer programs and can be implemented in general-use digital computers that execute the programs by using a computer-readable recording medium. Examples of the computer-readable recording medium include magnetic storage media (e.g., ROMs, floppy disks, hard disks, etc.), optical recording media (e.g., CD-ROMs, or DVDs), etc.

The invention might include, relate to, and/or be defined by, the following aspects:
1. A video decoding method comprising: receiving a bitstream of an encoded video; obtaining, from the bitstream, shape information of one or more scanning units each consisting of a predetermined number of adjacent largest coding units from among a plurality of largest coding units split from a picture; determining a shape of the one or more scanning units, based on the obtained shape information; obtaining, from the bitstream, processing order information of the one or more scanning units of a current picture, and processing order information of largest coding units comprised in the one or more scanning units; determining a processing order of the one or more scanning units comprised in the current picture, based on the processing order information of the one or more scanning units; determining a processing order of largest coding units comprised in each of the one or more scanning units, based on the processing order information of largest coding units comprised in the one or more scanning units; and decoding a plurality of largest coding units comprised in the current picture according to the determined processing order of the one or more scanning units and the determined processing order of largest coding units comprised in each of the one or more scanning units.
2. The video decoding method of aspect 1, wherein each of the largest coding units is hierarchically split into one or more coding units having a depth, a coding unit of a current depth is split into coding units having a lower depth, independently from neighboring coding units, and coding units of the current depth in each of the largest coding units are decoded according to a processing order of the coding units determined with respect to each of the largest coding units.
3. The video decoding method of aspect 1, wherein the determining of the shape of the one or more scanning units comprises determining a whole of the picture as one scanning unit.
4. The video decoding method of aspect 1, wherein the determining of the shape of the one or more scanning units comprises determining, as one scanning unit, each row of the plurality of largest coding units in the picture.
5. The video decoding method of aspect 4, wherein the determining of the processing order of the one or more scanning units comprised in the current picture comprises determining, as the processing order of the one or more scanning units, one of an order of performing processing in a downward direction from an uppermost scanning unit and an order of performing processing in an upward direction from a lowermost scanning unit, and the determining of the processing order of the largest coding units comprised in each of the one or more scanning units comprises determining, as the processing order of the largest coding units comprised in each of the one or more scanning units, one of an order of performing processing in a rightward direction from a leftmost largest coding unit in a row of largest coding units and an order of performing processing in a leftward direction from a rightmost largest coding unit in a row of largest coding units.
6. The video decoding method of aspect 1, wherein the determining of the shape of the one or more scanning units comprises determining NxM largest coding units as one scanning unit.
7. The video decoding method of aspect 6, wherein the determining of the processing order of the one or more scanning units comprised in the current picture comprises determining, as the processing order of the one or more scanning units, one of a raster scan order, an inverse order of the raster scan order, a processing order that is equal to the raster scan order in a horizontal direction and is opposite to the raster scan order in a vertical direction, and a processing order that is equal to the raster scan order in the vertical direction and is opposite to the raster scan order in the horizontal direction, and the determining of the processing order of the largest coding units comprised in each of the one or more scanning units comprises determining, as the processing order of the largest coding units comprised in each of the one or more scanning units, one of the raster scan order, the inverse order of the raster scan order, the processing order that is equal to the raster scan order in the horizontal direction and is opposite to the raster scan order in the vertical direction, and the processing order that is equal to the raster scan order in the vertical direction and is opposite to the raster scan order in the horizontal direction.
8. The video decoding method of aspect 1, wherein the determining of the processing order of the one or more scanning units comprised in the current picture comprises: extracting edge information comprised in a previous picture from sample values of the previous picture; determining a representative value of edge information directions, based on a direction of the extracted edge information; and determining, as the processing order of the one or more scanning units, a processing order that corresponds to the determined representative value and is from among candidate processing orders usable in the current picture.
9. The video decoding method of aspect 1, wherein the determining of the processing order of the one or more scanning units comprised in the current picture comprises: generating a statistical value of intra prediction modes used in decoding a previous picture; determining a representative value of the intra prediction modes of the previous picture, based on the statistical value; and determining, as the processing order of the one or more scanning units, a processing order that corresponds to the determined representative value and is from among candidate processing orders usable in the current picture.
10. The video decoding method of aspect 2, wherein the determining of the processing order of the one or more scanning units comprised in the current picture comprises: generating a statistical value of a plurality of processing orders of the coding units with respect to all largest coding units comprised in a previous picture; determining a representative value of the processing orders of the coding units of the previous picture, based on the statistical value; and determining, as the processing order of the one or more scanning units, a processing order that corresponds to the determined representative value and is from among candidate processing orders usable in the current picture.
11. The video decoding method of aspect 1, wherein the determining of the processing order of the largest coding units comprised in each of the one or more scanning units comprises: extracting edge information from sample values of a scanning unit co-located in a previous picture or sample values of an adjacent scanning unit adjacent to a current scanning unit in the current picture; determining a representative value of edge information directions, based on a direction of the extracted edge information; and determining, as a processing order of largest coding units comprised in the current scanning unit, a processing order that corresponds to the determined representative value and is from among candidate processing orders usable in the current scanning unit.
12. The video decoding method of aspect 1, wherein the determining of the processing order of the largest coding units comprised in each of the one or more scanning units comprises: generating a statistical value of intra prediction modes used in decoding a scanning unit co-located in a previous picture or an adjacent scanning unit adjacent to a current scanning unit in the current picture; determining a representative value of the intra prediction modes, based on the statistical value; and determining, as a processing order of largest coding units comprised in the current scanning unit, a processing order that corresponds to the determined representative value and is from among candidate processing orders usable in the current scanning unit.
13. The video decoding method of aspect 2, wherein the determining of the processing order of the largest coding units comprised in each of the one or more scanning units comprises: generating a statistical value of a plurality of processing orders of the coding units with respect to all largest coding units comprised in a scanning unit co-located in a previous picture or an adjacent scanning unit adjacent to a current scanning unit in the current picture; determining a representative value of the processing orders of the coding units, based on the statistical value; and determining, as a processing order of the largest coding units comprised in the current scanning unit, a processing order that corresponds to the determined representative value and is from among candidate processing orders usable in the current scanning unit.
14. A video decoding apparatus comprising: a bitstream receiver configured to receive a bitstream of an encoded video; an information obtainer configured to obtain, from the bitstream, shape information of one or more scanning units each consisting of a predetermined number of adjacent largest coding units from among a plurality of largest coding units split from a picture, processing order information of the one or more scanning units of a current picture, and processing order information of largest coding units comprised in the one or more scanning units; and a decoder configured to determine a shape of the one or more scanning units, based on the obtained shape information, to determine a processing order of the one or more scanning units comprised in the current picture, based on the processing order information of the one or more scanning units, to determine a processing order of largest coding units comprised in each of the one or more scanning units, based on the processing order information of largest coding units comprised in the one or more scanning units, and to decode the plurality of largest coding units comprised in the current picture according to the determined processing order of the one or more scanning units and the determined processing order of the largest coding units comprised in each of the one or more scanning units.
15. A video encoding method comprising: determining a shape of one or more scanning units each consisting of a predetermined number of adjacent largest coding units from among a plurality of largest coding units split from a picture; generating information indicating the shape of the one or more scanning units; determining a processing order of the one or more scanning units comprised in a current picture, and a processing order of largest coding units comprised in each of the one or more scanning units; encoding the plurality of largest coding units comprised in the current picture according to the determined processing order of the one or more scanning units and the determined processing order of the largest coding units comprised in each of the one or more scanning units; generating information indicating the processing order of the one or more scanning units, and information indicating the processing order of the largest coding units comprised in each of the one or more scanning units; and outputting a bitstream of an encoded video, the bitstream comprising the generated information.

## Claims

1. A video decoding method comprising:
receiving a bitstream of an encoded video;
obtaining, from the bitstream, shape information of one or more scanning units comprised in a current picture, the one or more scanning units consisting of a predetermined number of adjacent largest coding units from among a plurality of largest coding units split from the current picture, the shape information indicating a number of largest coding units in a single row in the scanning unit and a number of largest coding units in a single column in the scanning unit;
determining a shape of the one or more scanning units of the current picture, based on the obtained shape information, a scanning unit among the one or more scanning units of the current picture consisting of NxM largest coding units, wherein at least one of N and M is larger than 1, N indicates the number of largest coding units in a single row in the scanning unit, and M indicates the number of largest coding units in a single column in the scanning unit;
obtaining, from the bitstream, processing order information of the one or more scanning units of the current picture;
determining a processing order of the one or more scanning units of the current picture, based on the processing order information of the one or more scanning units, as an order of performing processing from the lower scanning unit to the upper scanning unit;
determining a processing order of coding units in a largest coding unit among largest coding units comprised in the one or more scanning units; and
decoding coding units in the plurality of largest coding units comprised in the current picture according to the determined processing order of the one or more scanning units and the determined processing order of coding units in largest coding units comprised in the one or more scanning units,
wherein the determining of the processing order of coding units in a largest coding unit among largest coding units comprises:
determining the coding units by splitting at least one of a height and a width of the largest coding unit among largest coding units comprised in the one or more scanning units; and
determining, as a processing order of the coding units in the largest coding unit, a first order of performing processing in a rightward direction from a left coding unit to a right coding unit in a row of the coding units or a second order of performing processing in a leftward direction from the right coding unit to the left coding unit in the row of the coding units.

2. The video decoding method of claim 1, wherein the largest coding units is hierarchically split into one or more coding units having a depth, a coding unit of a current depth is split into coding units having a lower depth, independently from neighboring coding units, and coding units of the current depth in the largest coding units are decoded according to a processing order of the coding units determined with respect to the largest coding units.

3. The video decoding method of claim 1, wherein the determining of the shape of the one or more scanning units comprises determining a whole of the current picture as one scanning unit.

4. A video decoding apparatus comprising:
one or more processors, at least one of the one or more processors configured to:
receive a bitstream of an encoded video;
obtain, from the bitstream, shape information of one or more scanning units comprised in a current picture, the one or more scanning units consisting of a predetermined number of adjacent largest coding units from among a plurality of largest coding units split from the current picture, the shape information indicating a number of largest coding units in a single row in the scanning unit and a number of largest coding units in a single column in the scanning unit; and
determine a shape of the one or more scanning units of the current picture, based on the obtained shape information, wherein a scanning unit among the one or more scanning units of the current picture consists of NxM largest coding units, wherein at least one of N and M is larger than 1, N indicates the number of largest coding units in a single row in the scanning unit, and M indicates the number of largest coding units in a single column in the scanning unit,
determine a processing order of the one or more scanning units of the current picture, based on the processing order information of the one or more scanning units, as an order of performing processing from the lower scanning unit to the upper scanning unit,
determine a processing order of coding units in a largest coding unit among largest coding units comprised in the one or more scanning units, and
decode coding units in the plurality of largest coding units comprised in the current picture according to the determined processing order of the one or more scanning units and the determined processing order of coding units in largest coding units comprised in the one or more scanning units,
wherein the one or more processors determine the coding units by splitting at least one of a height and a width of the largest coding unit among largest coding units comprised in the one or more scanning units, and determine, as a processing order of the coding units in a largest coding unit, a first order of performing processing in a rightward direction from a left coding unit to a right coding unit in a row of the coding units or a second order of performing processing in a leftward direction from the right coding unit to the left coding unit in the row of the coding units.

5. A video encoding method comprising:
determining a shape of one or more scanning units comprised in a current picture, the one or more scanning units consisting of a predetermined number of adjacent largest coding units from among a plurality of largest coding units split from the current picture;
generating shape information indicating a number of largest coding units in a single row in the scanning unit and a number of largest coding units in a single column in the scanning unit, wherein a scanning unit consists of NxM largest coding units, wherein at least one of N and M is larger than 1, N indicates the number of largest coding units in a single row in the scanning unit, and M indicate the number of largest coding units in a single column in the scanning unit;
determining a processing order of one or more scanning units of the current picture, as an order of performing processing from the lower scanning unit to the upper scanning unit;
determining a processing order of coding units in a largest coding unit among largest coding units comprised in the one or more scanning units;
encoding coding units in the plurality of largest coding units comprised in the current picture according to the determined processing order of the one or more scanning units of the current picture and the determined processing order of coding units in largest coding units comprised in the one or more scanning units of the current picture;
generating information indicating the processing order of the one or more scanning units; and
outputting a bitstream of an encoded video, the bitstream comprising the generated information,
wherein the determining of the processing order of coding units in a largest coding unit among largest coding units comprises:
determining the coding units by splitting at least one of a height and a width of the largest coding unit among largest coding units comprised in the one or more scanning units; and
determining, as a processing order of the coding units in the largest coding unit, a first order of performing processing in a rightward direction from a left coding unit to a right coding unit in a row of the coding units or a second order of performing processing in a leftward direction from the right coding unit to the left coding unit in the row of the coding units.
